(19) Europäisches Patentamt
European Patent Office
Office européen des brevets

(11) **EP 4 693 183 A1**

(12) **EUROPEAN PATENT APPLICATION**
published in accordance with Art. 153(4) EPC

(43) Date of publication:
**11.02.2026 Bulletin 2026/07**

(21) Application number: **23933860.1**

(22) Date of filing: **04.12.2023**

(51) International Patent Classification (IPC):
**G06T 7/33** *(2017.01)* **G06T 7/73** *(2017.01)*

(52) Cooperative Patent Classification (CPC):
**G06T 7/33; G06T 7/73**

(86) International application number:
**PCT/CN2023/136261**

(87) International publication number:
**WO 2024/216994 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.04.2023 CN 202310436160**
**14.06.2023 CN 202310705705**

(71) Applicant: **Huawei Cloud Computing Technologies Co., Ltd.**
**Guiyang, Guizhou 550025 (CN)**

(72) Inventors:
• **LIANG, Xiao**
**Shenzhen, Guangdong 518129 (CN)**
• **LIU, Liu**
**Shenzhen, Guangdong 518129 (CN)**
• **WANG, Runzhi**
**Shenzhen, Guangdong 518129 (CN)**
• **TANG, Zhongwei**
**Shenzhen, Guangdong 518129 (CN)**
• **LI, Jiangwei**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **CLOUD TECHNOLOGY-BASED POSITIONING METHOD AND DEVICE**

(57) A cloud technology-based positioning method and apparatus are disclosed, and relate to the field of computers. The positioning method includes: obtaining to-be-positioned image data; retrieving the to-be-positioned image data from a three-dimensional model database, to obtain first point cloud data having a matched similarity to the to-be-positioned image data; and then performing registration on the to-be-positioned image data based on a point having location information in the first point cloud data, to obtain a first pose corresponding to the to-be-positioned image data. The first point cloud data having the matched similarity to the to-be-positioned image data is retrieved from the three-dimensional model database, to determine, from the entire three-dimensional model database, point cloud data corresponding to a partial region matching the to-be-positioned image data. In this way, registration is performed on the to-be-positioned image data by using the first point cloud data, and image positioning is implemented by using the point cloud data of the partial region in the three-dimensional model database, to reduce an amount of data to be processed and improve positioning efficiency.

FIG. 4

## Description

## TECHNICAL FIELD

This application relates to the field of computer technologies, and in particular, to a cloud technology-based positioning method and apparatus.

## BACKGROUND

Object positioning is usually performed by using a method such as network, satellite positioning, or image positioning. In an image positioning scenario, an image needs to be captured in a specified region, and positioning is performed based on the image. However, the image needs to include a positioning tag (for example, an image two-dimensional code) deployed in advance in the region, and the positioning tag indicates a determined location of the positioning tag in the region. A relative location between the captured image and the positioning tag may be determined based on the positioning tag in the image, and further positioning of the captured image in the region may be obtained based on the relative location and the determined location of the positioning tag. Because the image positioning method depends on the positioning tag deployed in the region, the positioning tag needs to be deployed in the specified region before image positioning is performed. Consequently, complexity is relatively high. Therefore, how to provide a more convenient positioning method becomes an urgent problem to be resolved currently.

## SUMMARY

This application provides a cloud technology-based positioning method and apparatus, to resolve a problem that image positioning is relatively complex and positioning efficiency is relatively low because an image positioning process depends on a positioning tag that is included in an image and deployed in a region.

According to a first aspect, this application provides a cloud technology-based positioning method. The positioning method may be applied to a positioning system or a computing device that supports the positioning system in implementing the positioning method. For example, the computing device may be a server or a terminal. The positioning method includes: obtaining to-be-positioned image data; retrieving the to-be-positioned image data from a three-dimensional model database, to obtain first point cloud data having a matched similarity to the to-be-positioned image data; and then performing registration on the to-be-positioned image data based on a point having location information in the first point cloud data, to obtain a first pose corresponding to the to-be-positioned image data. The to-be-positioned image data includes an image or a video, the three-dimensional model database includes a plurality of pieces of point cloud data obtained by sampling a three-dimensional model for a site to which the to-be-positioned image data belongs, and the point cloud data indicates a point having location information in a sampling region of the three-dimensional model.

In this application, the first point cloud data having the matched similarity to the to-be-positioned image data is retrieved from the three-dimensional model database, to determine, from the entire three-dimensional model database, point cloud data corresponding to a partial region matching the to-be-positioned image data. In this way, registration is performed on the to-be-positioned image data by using the first point cloud data, and image positioning is implemented by using the point cloud data of the partial region in the three-dimensional model, to reduce an amount of data to be processed and improve positioning efficiency. In addition, because each point in the point cloud data has location information, the first pose corresponding to the to-be-positioned image data may be directly obtained by using the first point cloud data, to avoid a problem that a processing process is complex because a positioning tag is deployed in a positioning region before image positioning is performed, thereby improving positioning convenience and further improving positioning efficiency.

For example, the site to which the to-be-positioned image data belongs may be an entire building or a partial region in a building determined by a user. The first pose includes a location and an angle of the to-be-positioned image data in the three-dimensional model.

In a possible implementation, the positioning method further includes: receiving a sampling density parameter; dividing, based on the sampling density parameter, the sampling region of the three-dimensional model at the site to which the to-be-positioned image data belongs into a plurality of sampling sub-regions; and separately performing point cloud data sampling on the plurality of sampling sub-regions, to obtain the three-dimensional model database.

In this application, the sampling region of the three-dimensional model is divided into the plurality of sampling sub-regions, to obtain point cloud data corresponding to each sampling sub-region in the three-dimensional model database. Therefore, when retrieval and registration are performed based on the to-be-positioned image data, processing is performed by using a plurality of pieces of small-range point cloud data, that is, retrieval and registration are performed from a plurality of pieces of small-range data by using one piece of small-range data. This avoids a problem that registration efficiency and accuracy are reduced because when registration is performed on the to-be-positioned image data, processing is performed by using point cloud data corresponding to the sampling region of the entire three-dimensional model, that is, registration is performed from entire large-range data by using one piece of small-range data. Therefore, efficiency and accuracy of performing registration on the to-be-positioned image data by using semantic data corresponding to each sampling sub-region are improved.

In a possible case, the positioning method further includes: separately rendering the plurality of sampling sub-regions, to obtain image data and semantic data that correspond to each sampling sub-region in the three-dimensional model database.

In a possible implementation, the performing registration on the to-be-positioned image data based on the point having the location information in the first point cloud data, to obtain the first pose corresponding to the to-be-positioned image data includes: generating a processing interface corresponding to the first point cloud data; receiving a trigger operation of a user on the processing interface; in response to the trigger operation, determining to-be-registered point cloud data selected by the user from the first point cloud data; and performing registration on the to-be-positioned image data based on a point having location information in the to-be-registered point cloud data, to obtain the first pose corresponding to the to-be-positioned image data.

In this application, the user performs the trigger operation on the processing interface corresponding to the first point cloud data, and then the to-be-registered point cloud data is determined from the first point cloud data, to reduce a quantity of point cloud data during subsequent registration, thereby reducing an amount of data to be processed and improving positioning efficiency.

For example, the processing interface may include a distribution heat map of the first point cloud data, and the distribution heat map of the first point cloud data indicates a density of points that have location information in the first point cloud data and that are in the three-dimensional model for the site to which the to-be-positioned image data belongs. The distribution heat map is also a density of viewpoints, at locations in the three-dimensional model, corresponding to the first point cloud data.

For another example, the processing interface may be the first point cloud data or image data corresponding to the first point cloud data.

For still another example, the processing interface may be a location, in the three-dimensional model, of a viewpoint corresponding to the first point cloud data.

In a possible implementation, the positioning method further includes: comparatively displaying rendered image data of the three-dimensional model at the first pose and the to-be-positioned image data when receiving a comparison display instruction triggered by the user; or separately displaying rendered image data of the three-dimensional model at the first pose or the to-be-positioned image data when receiving a separate display instruction triggered by the user.

In this application, because both the to-be-positioned image data and the rendered image data correspond to the first pose, the rendered image data and the to-be-positioned image data partially overlap. A difference of the to-be-positioned image data compared with the rendered image data may be obtained by comparing or separately displaying the to-be-positioned image data and the rendered image data. This helps the user determine a task progress while implementing visualization.

In a possible implementation, the three-dimensional model database further includes image data corresponding to the point cloud data, the image data indicates a planar image in the sampling region of the three-dimensional model for the site to which the to-be-positioned image data belongs, and after the performing registration on the to-be-positioned image data based on the point having the location information in the first point cloud data, to obtain the first pose corresponding to the to-be-positioned image data, the positioning method further includes: extracting a first multi-level feature of the to-be-positioned image data and a second multi-level feature of a planar image corresponding to the first point cloud data; and calibrating the first pose based on the first multi-level feature and the second multi-level feature to obtain a second pose. The multi-level feature indicates a feature combination obtained by undergoing feature extraction networks with different quantities of layers.

In this application, the first pose is optimized to obtain the second pose, so that a more accurate location and angle of the to-be-positioned image data in the three-dimensional model are obtained, and the to-be-positioned image data is positioned more accurately, to improve positioning accuracy.

In a possible implementation, the three-dimensional model database further includes semantic data corresponding to the point cloud data, the semantic data indicates semantic information in the sampling region of the three-dimensional model for the site to which the to-be-positioned image data belongs, and the retrieving the to-be-positioned image data from the three-dimensional model database, to obtain the first point cloud data having the matched similarity to the to-be-positioned image data includes: determining semantic information of the to-be-positioned image data, and retrieving the semantic information of the to-be-positioned image data from the three-dimensional model database, to obtain first semantic data having a matched similarity to the semantic information of the to-be-positioned image data; and determining, based on a correspondence between point cloud data and semantic data, the first point cloud data corresponding to the first semantic data.

In this application, the three-dimensional model database is retrieved based on the semantic information of the to-be-positioned image data, so that retrieval based on a type of content in the to-be-positioned image data and a relative location feature of the content in the to-be-positioned image data is implemented, to obtain the point cloud data having the matched similarity to the to-be-positioned image data. This avoids using all point cloud data to perform image point cloud registration, reduces a computing amount of image point cloud registration, improves a speed of image point cloud registration, and improves positioning efficiency.

In a possible implementation, the retrieving the to-be-positioned image data from the three-dimensional model database, to obtain the first point cloud data having the matched similarity to the to-be-positioned image data includes: determining point cloud information of the to-be-positioned image data, and retrieving the point cloud information of the to-be-positioned image data from the three-dimensional model database, to obtain the first point cloud data having a matched similarity to the point cloud information of the to-be-positioned image data.

In this application, the three-dimensional model database is retrieved based on the point cloud information of the to-be-positioned image data, and the first point cloud data is obtained by matching a point having location information in the point cloud information with a point having location information in a plurality of pieces of point cloud data included in the three-dimensional model database, that is, data matching one piece of small-range data is retrieved from a plurality of pieces of small-range data, to reduce a computing amount of point cloud registration and improve a speed of point cloud registration. In addition, because the point cloud information and the point cloud data each have the point having the location information, matching is performed based on the points, so that a speed of the point cloud data can be improved, thereby improving positioning efficiency.

According to a second aspect, this application provides a cloud technology-based positioning apparatus. The apparatus is used for a computing device or a computing device that supports a positioning system in implementing a positioning method, and the positioning apparatus includes modules configured to perform the positioning method in any one of the first aspect or the optional implementations of the first aspect. For example, the positioning apparatus includes an obtaining module, a retrieval module, and a registration module.

The obtaining module is configured to obtain to-be-positioned image data. The to-be-positioned image data includes an image or a video.

The retrieval module is configured to retrieve the to-be-positioned image data from a three-dimensional model database, to obtain first point cloud data having a matched similarity to the to-be-positioned image data. The three-dimensional model database includes a plurality of pieces of point cloud data obtained by sampling a three-dimensional model for a site to which the to-be-positioned image data belongs. The point cloud data indicates a point having location information in a sampling region of the three-dimensional model.

The registration module is configured to perform registration on the to-be-positioned image data based on a point having location information in the first point cloud data, to obtain a first pose corresponding to the to-be-positioned image data.

In a possible implementation, the apparatus further includes a sampling module. The sampling module is configured to receive a sampling density parameter; divide, based on the sampling density parameter, the sampling region of the three-dimensional model for the site to which the to-be-positioned image data belongs into a plurality of sampling sub-regions; and separately perform point cloud data sampling on the plurality of sampling sub-regions, to obtain the three-dimensional model database.

In a possible implementation, the registration module is specifically configured to generate a processing interface corresponding to the first point cloud data; receive a trigger operation of a user on the processing interface; in response to the trigger operation, determine to-be-registered point cloud data selected by the user from the first point cloud data; and perform registration on the to-be-positioned image data based on a point having location information in the to-be-registered point cloud data, to obtain the first pose corresponding to the to-be-positioned image data.

In a possible implementation, the processing interface includes a distribution heat map of the first point cloud data, and the distribution heat map of the first point cloud data indicates a density of points that have location information in the first point cloud data and that are in the three-dimensional model for the site to which the to-be-positioned image data belongs.

In a possible implementation, the positioning apparatus further includes a display module. The display module is configured to comparatively display rendered image data of the three-dimensional model at the first pose and the to-be-positioned image data when receiving a comparison display instruction triggered by the user; or separately display rendered image data of the three-dimensional model at the first pose or the to-be-positioned image data when receiving a separate display instruction triggered by the user.

In a possible implementation, the three-dimensional model database further includes image data corresponding to the point cloud data, the image data indicates a planar image in the sampling region of the three-dimensional model for the site to which the to-be-positioned image data belongs, and the apparatus further includes a calibration module. The calibration module is configured to extract a first multi-level feature of the to-be-positioned image data and a second multi-level feature of a planar image corresponding to the first point cloud data; and calibrate the first pose based on the first multi-level feature and the second multi-level feature to obtain a second pose. The multi-level feature indicates a feature combination obtained by undergoing feature extraction networks with different quantities of layers.

In a possible implementation, the three-dimensional model database further includes semantic data corresponding to the point cloud data, the semantic data indicates semantic information in the sampling region of the three-dimensional model for the site to which the to-be-positioned image data belongs, and the retrieval module is specifically configured to determine semantic information of the to-be-positioned image data, and retrieve the semantic information of the to-be-positioned image data from the three-dimensional model database, to obtain first semantic data having a matched similarity to the semantic information of the to-be-positioned image data; and determine, based on a correspondence between point cloud data and semantic data, the first point cloud data corresponding to the first semantic data.

In a possible implementation, the retrieval module is specifically configured to determine point cloud information of the to-be-positioned image data, and retrieve the point cloud information of the to-be-positioned image data from the three-dimensional model database, to obtain the first point cloud data having a matched similarity to the point cloud information of the to-be-positioned image data.

According to a third aspect, this application provides a computing device cluster, including at least one computing device, where each computing device includes a processor and a memory. The processor of the at least one computing device is configured to execute instructions stored in the memory of the at least one computing device, so that the computing device cluster performs the method disclosed in any one of the first aspect or the possible implementations of the first aspect.

According to a fourth aspect, this application provides a computer program product including instructions. When the instructions are run by a computer device cluster, the computer device cluster is enabled to implement the method disclosed in any one of the first aspect or the possible implementations of the first aspect.

According to a fifth aspect, this application provides a computer-readable storage medium, including computer program instructions. When the computer program instructions are executed by a computing device cluster, the computing device cluster is enabled to perform the method disclosed in any one of the first aspect or the possible implementations of the first aspect.

For beneficial effects of the second aspect to the fifth aspect, refer to the descriptions of any one of the first aspect or the implementations of the first aspect. Details are not described herein again. In this application, based on the implementations provided in the foregoing aspects, the implementations may be further combined to provide more implementations.

## BRIEF DESCRIPTION OF DRAWINGS

FIG. 1 is a diagram of a structure of a neural network according to this application;
FIG. 2 is a diagram of a structure of a convolutional neural network according to this application;
FIG. 3 is a diagram of a computer system according to this application;
FIG. 4 is a schematic flowchart of a positioning method according to this application;
FIG. 5 is a schematic flowchart of a method for optimizing a first pose according to this application;
FIG. 6 is a diagram 1 of a display interface according to this application;
FIG. 7 is a diagram 2 of a display interface according to this application;
FIG. 8 is a schematic flowchart 1 of an image positioning method according to this application;
FIG. 9 is a schematic flowchart of a video positioning method according to this application;
FIG. 10 is a schematic flowchart 2 of an image positioning method according to this application;
FIG. 11 is a diagram of a structure of a camera according to this application;
FIG. 12 is a diagram 1 of a structure of a cloud technology-based positioning apparatus according to this application;
FIG. 13 is a diagram 2 of a structure of a cloud technology-based positioning apparatus according to this application; and
FIG. 14 is a diagram of a structure of a computing device according to this application.

## DESCRIPTION OF EMBODIMENTS

For ease of understanding, technical terms in this application are first described.

A building information model (building information model, BIM) means that a comprehensive building engineering information library consistent with an actual situation is provided for a three-dimensional model by using a digital technology based on the established virtual three-dimensional model for building engineering. The building engineering information library includes geometric information, professional attributes and status information for describing building components, and further includes status information of non-component objects (such as space and motion behavior). In other words, in this application, the BIM is used to determine image data of the three-dimensional model for building engineering, semantic information (that is, semantic data corresponding to the three-dimensional model) of each component in the three-dimensional model, and point cloud information (that is, point cloud data corresponding to the three-dimensional model).

Augmented reality (augmented reality, AR) is a technology that ingeniously combines virtual information with a real environment, and virtual information such as text, images, three-dimensional models, music, and videos generated by computers is simulated and then applied to the real environment. The virtual information and information in the real environment complement each other, to "enhance" the real environment.

A visual positioning system (visual positioning system, VPS) computes a location of a camera lens, a camera, or the like in a real environment based on visual information (an image captured by the camera lens, the camera, or the like).

A structure from motion (structure from motion, SfM) is a technology in which a location of a camera lens, a camera, or the like that captures a plurality of images or videos can be restored from a plurality of images or videos offline. In this application, the SfM is used to construct image point cloud data based on the plurality of images or videos, and compute a relative pose between images.

Simultaneous localization and mapping (simultaneous localization and mapping, SLAM) is a technology in which a location of a camera lens, a camera, or the like that captures a plurality of images or videos can be restored from the plurality of images or videos online and a map is constructed incrementally based on the plurality of images or videos. In this application, the SLAM is used to construct image point cloud data based on the plurality of images or videos, and compute a relative pose between images.

A semantic map represents image data of a type of content in an image and a relative location between a plurality of pieces of content.

Point cloud data is a dataset of points in a coordinate system. The point cloud data includes coordinate information of each point. In the BIM, object type information and the like may be assigned to each point in a point cloud based on semantic information of each component.

A neural network may include neurons, and the neuron may be an operation unit that uses $x_s$ and an intercept 1 as inputs. An output of the operation unit satisfies the following formula 1.

$$h_{W,b}(x) = f(W^T x) = f(\sum_{s=1}^{n} W_s x_s + b) \qquad \text{Formula 1}$$

s=1, 2, ..., n, n is a natural number greater than 1, $W_s$ is a weight of $x_s$, and b is an offset of a neuron. $f$ is an activation function (activation functions) of the neuron, and is used to introduce a non-linear characteristic into the neural network, to convert an input signal in the neuron into an output signal. The output signal of the activation function may be used as an input of a next layer, and the activation function may be a sigmoid function. The neural network is a network formed by connecting a plurality of single neurons, that is, an output of one neuron may be an input of another neuron. An input of each neuron may be connected to a local receptive field of a previous layer, to extract a feature of the local receptive field, and the local receptive field may be a region including several neurons. A weight represents a strength of a connection between different neurons. The weight determines influence of an input on an output. The weight close to 0 means that the input is changed and the output is not changed. A negative weight means that an input is increased and an output is decreased.

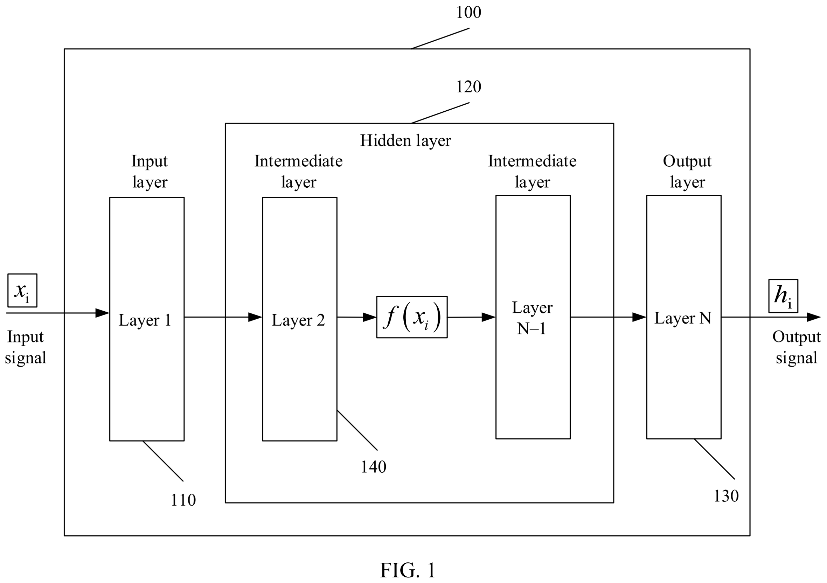

FIG. 1 is a diagram of a structure of a neural network according to this application. A neural network 100 includes N processing layers, and N is an integer greater than or equal to 3. A 1st layer of the neural network 100 is an input layer 110, and is responsible for receiving an input signal. A last layer of the neural network 100 is an output layer 130, and is responsible for outputting a processing result of the neural network. Layers other than the 1st layer and the last layer are intermediate layers 140, these intermediate layers 140 together form a hidden layer 120, and each intermediate layer 140 in the hidden layer 120 may receive an input signal and output a signal. The hidden layer 120 is responsible for a processing procedure of the input signal. Each layer represents a logical level of signal processing. Through a plurality of layers, a data signal may be processed by a plurality of levels of logic.

In some feasible embodiments, the input signal of the neural network may be a signal in various forms, such as a video signal, a voice signal, a text signal, an image signal, or a temperature signal. The video signal or the image signal may be various sensor signals such as an image signal recorded or captured by a camera (an image sensor). The input signal of the neural network further includes various other engineering signals that can be processed by a computer, which are not listed one by one herein. If deep learning is performed on the image signal by using the neural network, quality of an image processed by the neural network can be improved.

The convolutional neural network (convolutional neural network, CNN) is a deep neural network with a convolutional structure. The convolutional neural network includes a feature extractor including a convolutional layer and a sampling sub-layer. The feature extractor may be considered as a filter. A convolution process may be considered as performing convolution by using a trainable filter and an input image or a feature map (feature map). The convolutional layer is a neuron layer that is in the convolutional neural network and at which convolution processing is performed on an input signal. At the convolutional layer of the convolutional neural network, one neuron may be connected only to some adjacent-layer neurons. One convolutional layer may output several feature maps, and the feature map may be an intermediate result in a convolutional neural network operation process. Neurons in a same feature map share a weight, and the shared weight herein is a convolution kernel. Weight sharing may be understood as that an image information extraction manner is unrelated to a location. In other words, statistical information of a part of an image is the same as that of another part. This means that image information learned in a part can also be used in another part. Therefore, the same image information obtained through learning can be used for all locations on the image. At a same convolutional layer, a plurality of convolution kernels may be used to extract different image information. Usually, a larger quantity of convolution kernels indicates richer image information reflected in a convolution operation.

The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced and an overfitting risk is also reduced.

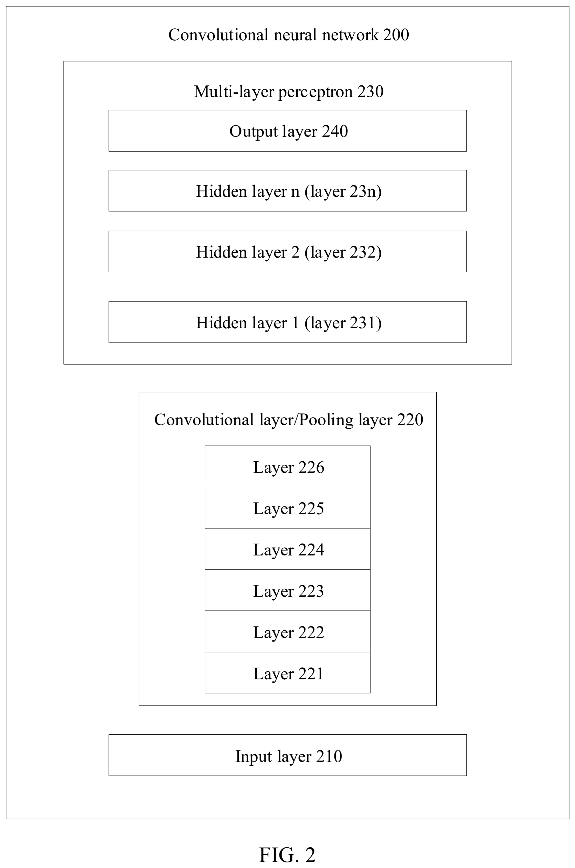

For example, FIG. 2 is a diagram of a structure of a convolutional neural network according to this application. A convolutional neural network 200 may include an input layer 210, a convolutional layer/pooling layer 220 (where the pooling layer is optional), and a multi-layer perceptron 230.

The convolutional layer/pooling layer 220 may include, for example, a layer 221 to a layer 226. In an example, the layer 221 may be, for example, a convolutional layer, the layer 222 may be, for example, a pooling layer, the layer 223 may be, for example, a convolutional layer, the layer 224 may be, for example, a pooling layer, the layer 225 may be, for example, a convolutional layer, and the layer 226 may be, for example, a pooling layer. In another example, the layer 221 and the layer 222 may be, for example, convolutional layers, the layer 223 may be, for example, a pooling layer, the layer 224 and the layer 225 may be, for example, convolutional layers, and the layer 226 may be, for example, a pooling layer. An output of a convolutional layer may be used as an input of a subsequent pooling layer, or may be used as an input of another convolutional layer to continue a convolution operation.

An internal working principle of one convolutional layer is described by using the convolutional layer 221 as an example.

The convolutional layer 221 may include a plurality of convolution operators, and the convolution operator may also be referred to as a kernel. The convolution operator is equivalent to a filter that extracts specific information from an input image matrix in image processing. The convolution operator may be essentially a weight matrix, and the weight matrix is usually predefined. A size of the weight matrix is related to a size of an image. It should be noted that a depth dimension (depth dimension) of the weight matrix is the same as a depth dimension of the input image. In the process of performing the convolution operation, the weight matrix extends to an entire depth of the input image. Therefore, a convolutional output of a single depth dimension is generated through convolution with a single weight matrix. However, in most cases, the single weight matrix is not used, but a plurality of weight matrices with a same size (rows $\times$ columns), namely, a plurality of same-type matrices, are applied. Outputs of the weight matrices are stacked to form a depth dimension of a convolutional image. Different weight matrices may be used to extract different features from the image. For example, one weight matrix is used to extract edge information of the image, another weight matrix is used to extract a specific color of the image, and still another weight matrix is used to blur unnecessary noise in the image. Sizes of the plurality of weight matrices (rows $\times$ columns) are the same. Sizes of feature maps extracted from the plurality of weight matrices with the same size are also the same, and then the plurality of extracted feature maps with the same size are combined to form an output of the convolution operation.

Weight values in these weight matrices need to be obtained through massive training in actual application. Each weight matrix including weight values obtained through training may be used to extract information from the input image, so that the convolutional neural network 200 performs correct prediction.

When the convolutional neural network 200 includes a plurality of convolutional layers, a larger quantity of general features are usually extracted at an initial convolutional layer (for example, the layer 221). The general features may be also referred to as low-level features. As a depth of the convolutional neural network 200 increases, a feature extracted at a more subsequent convolutional layer (for example, the layer 226) is more complex, for example, a high-level semantic feature. A feature with higher semantics is more applicable to a to-be-resolved problem.

Because a quantity of training parameters usually needs to be reduced, a pooling layer usually needs to be periodically introduced after a convolutional layer. For the layer 221 to the layer 226 shown in the convolutional layer/pooling layer 220 in FIG. 2, one convolutional layer may be followed by one pooling layer, or a plurality of convolutional layers may be followed by one or more pooling layers. In an image processing procedure, a unique purpose of the pooling layer is to reduce a space size of an image. The pooling layer may include an average pooling operator and/or a maximum pooling operator, to perform sampling on the input image to obtain an image with a small size. The average pooling operator may be used perform calculation on pixel values in the image in a specific range, to generate an average value, and the average value is used as an average pooling result. The maximum pooling operator may be used to select a pixel with a maximum value in a specific range as a maximum pooling result. In addition, similar to a case in which a size of a weight matrix in the convolutional layer should be related to a size of the image, an operator in the pooling layer should be also related to the size of the image. A size of a processed image output from the pooling layer may be less than a size of an image input into the pooling layer. Each pixel in the image output from the pooling layer indicates an average value or a maximum value of a corresponding sub-region of the image input into the pooling layer.

After processing is performed at the convolutional layer/pooling layer 220, the convolutional neural network 200 still cannot output required output information. As described above, at the convolutional layer/pooling layer 220, a feature is extracted, and parameters resulting from an input image are reduced. However, to generate final output information (required class information or other related information), the convolutional neural network 200 needs to generate, by using the multi-layer perceptron 230, one output or a group of outputs whose quantity is equal to a quantity of required classes. Therefore, the multi-layer perceptron 230 may include a plurality of hidden layers (the layer 231, the layer 232 to the layer 23n shown in FIG. 2) and an output layer 240. Parameters included in the plurality of hidden layers may be obtained through pre-training based on related training data of a specific task type. For example, the task type may include image recognition, image classification, and super-resolution image reconstruction.

The plurality of hidden layers in the multi-layer perceptron 230 are followed by the output layer 240, namely, the last layer of the entire convolutional neural network 200. The output layer 240 has a loss function similar to cross entropy for classification, and is specifically configured to calculate a prediction error. Once forward propagation (for example, propagation in a direction from the layer 210 to the layer 240 in FIG. 2 is forward propagation) of the entire convolutional neural network 200 is completed, back propagation (for example, propagation in a direction from the layer 240 to the layer 210 in FIG. 2 is back propagation) starts to update the weight value and a deviation of each layer mentioned above, to reduce a loss of the convolutional neural network 200 and an error between a result output by the convolutional neural network 200 through the output layer and an ideal result.

It should be noted that the convolutional neural network 200 shown in FIG. 2 is merely used as an example of a convolutional neural network. In specific application, the convolutional neural network may alternatively exist in a form of another network model, for example, a U-Net, a morphable face model (3D Morphable Face Model, 3DMM), and a residual network (Residual Network, ResNet).

To perform positioning based on an image, the foregoing shows that a positioning tag is deployed in a region to be positioned and positioning can be performed only based on a captured image with the positioning tag.

In another possible implementation, SLAM is used to perform positioning based on the foregoing positioning tag.

An example in which a conventional monocular camera of a mobile device obtains an image is used for description. The image captured by the conventional monocular camera is obtained, and initial positioning of the mobile device may be obtained with reference to the positioning tag. SLAM positioning in a small-range scenario is performed by using the conventional monocular camera, a radar built in the mobile device, and a gyroscope acceleration sensor.

For example, data of locations such as a corner and an edge of a building may be captured through SLAM, and corresponding point cloud data is established. Then, the point cloud data and a BIM corresponding to the building are matched with the building in a manner of feature matching and coordinate system alignment, to obtain a corresponding location.

Because the foregoing solution still depends on the positioning tag, a positioning process is relatively complex, and positioning efficiency is relatively low. In addition, the conventional monocular camera has a relatively narrow field of view for obtaining an image, and obtains less image information and is easily blocked. An image captured by the conventional monocular camera is directly matched with an entire BIM, resulting in an excessively large amount of matched data, relatively low matching efficiency, and relatively low positioning efficiency.

To perform positioning based on an image more effectively, this application provides a cloud technology-based positioning method. The method is applicable to a computing device. The method includes: obtaining to-be-positioned image data; retrieving the to-be-positioned image data from a three-dimensional model database, to obtain first point cloud data having a matched similarity to the to-be-positioned image data; and then performing registration on the to-be-positioned image data based on a point having location information in the first point cloud data, to obtain a first pose corresponding to the to-be-positioned image data. The to-be-positioned image data includes an image or a video, the three-dimensional model database includes a plurality of pieces of point cloud data obtained by sampling a three-dimensional model for a site to which the to-be-positioned image data belongs, and the point cloud data indicates a point having location information in a sampling region of the three-dimensional model.

In this application, the first point cloud data having the matched similarity to the to-be-positioned image data is retrieved from the three-dimensional model database, to determine, from the entire three-dimensional model database, point cloud data corresponding to a partial region matching the to-be-positioned image data. In this way, registration is performed on the to-be-positioned image data by using the first point cloud data, and image positioning is implemented by using the point cloud data of the partial region in the three-dimensional model, to reduce an amount of data to be processed and improve positioning efficiency. In addition, because each point in the first point cloud data has location information, the first pose corresponding to the to-be-positioned image data may be directly obtained by using the first point cloud data, to avoid a problem that a processing process is complex because a positioning tag is deployed in a positioning region before image positioning is performed, thereby improving positioning convenience and further improving positioning efficiency.

The following describes in detail the positioning method provided in this application with reference to the accompanying drawings.

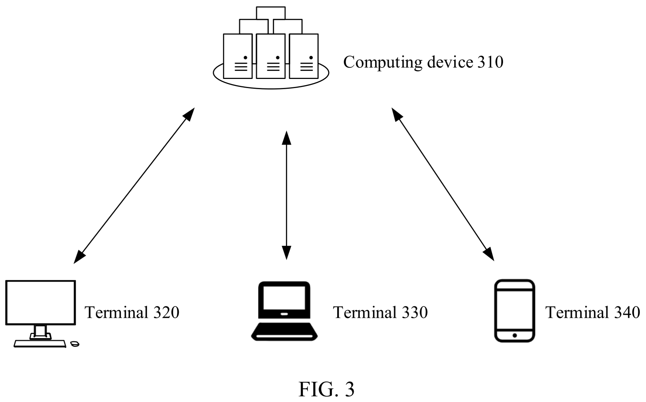

First, FIG. 3 is a diagram of a computer system according to this application. As shown in FIG. 3, the computer system includes at least one computing device 310. The computing device 310 is configured to determine a first pose of to-be-positioned image data in a three-dimensional model based on the obtained to-be-positioned image data, that is, a pose of a capture point corresponding to the to-be-positioned image data in a positioning region corresponding to the three-dimensional model.

In a possible case, the computing device 310 may be a server, a personal desktop computer, a notebook computer, a smartphone, or the like. The server may be a centralized server or a distributed server.

In a possible example, the computer system further includes a terminal 320, a terminal 330, and a terminal 340.

The terminal 320 in the terminal 320, the terminal 330, and the terminal 340 is used as an example for description. The terminal 320 may be a device such as a terminal server, a smartphone, a notebook computer, a tablet computer, a personal desktop computer, or a smart camera.

The terminal 320 may communicate with the computing device 310 in a wired manner, for example, the Ethernet, an optical fiber, and a peripheral component interconnect express (peripheral component interconnect express, PCIe) bus disposed in the computer system for connecting the computing device 310 to the terminal 320. Alternatively, the terminal 320 may communicate with the computing device 310 in a wireless manner, such as the Internet, wireless fidelity (wireless fidelity, Wi-Fi), and an ultra-wideband (ultra-wideband, UWB) technology.

It should be noted that FIG. 3 is merely an example provided in this application, and the computer system may further include more computing devices 310 or more terminals. In addition, internal components of the computing device 310 may include one or more processors, and a power supply, a hard disk, an optical drive, a chassis, a heat dissipation system, and another input/output controller and interface that support running of the processor, which are not shown in FIG. 3. A form and a quantity of the processors or the foregoing hardware that supports running of the processor are not limited in this application.

With reference to the foregoing computer system, the method provided in embodiments can be applied to a positioning scenario. Specifically, the method in embodiments can be applied to scenarios such as positioning and navigation, task progress comparison, and pipeline network operation and maintenance. In each scenario, the computing device 310 performs the method provided in this application, which is specifically as follows: The computing device 310 obtains to-be-positioned image data captured by a camera or a camera lens in a positioning region, and retrieves, based on the to-be-positioned image data, a three-dimensional model database corresponding to the region to be positioned, to obtain first point cloud data having a matched similarity to the to-be-positioned image data. The computing device 310 performs registration on the first point cloud data by using the to-be-positioned image data, to obtain a first pose of the to-be-positioned image data in a three-dimensional model, that is, a first pose of a capture point corresponding to the to-be-positioned image data in the positioning region.

For example, the camera or the camera lens may be an internal component of the computing device 310, or an external component connected to the computing device 310. A connection manner may be a wired connection or a wireless connection. For content of the wired connection and the wireless connection, refer to the descriptions of the communication manner between the terminal 320 and the computing device 310 in FIG. 3. Details are not described herein again.

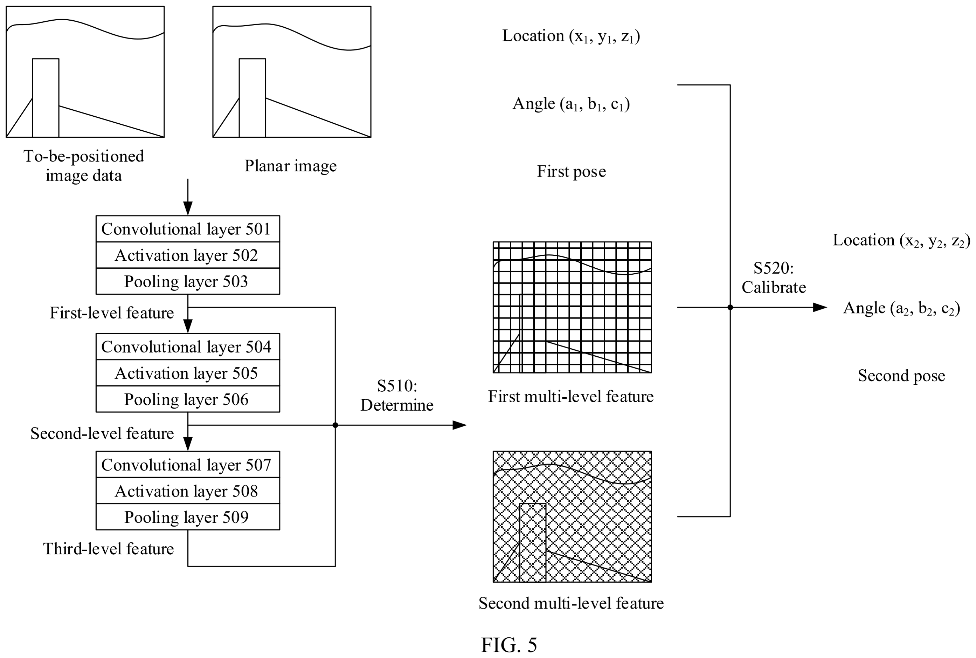

In a possible example, the computing device 310 may further optimize the first pose to obtain a second pose. For content of optimizing the first pose to obtain the second pose by the computing device 310, refer to the following content shown in FIG. 5 below. Details are not described herein.

In the positioning and navigation scenario, the computing device 310 plans a navigation route based on the first pose or the second pose and a target location, and then the computing device 310 moves based on the navigation route.

In the task progress comparison scenario, after obtaining the first pose or the second pose, the computing device 310 renders rendered image data of the three-dimensional model at the first pose. The computing device 310 displays the rendered image data and the to-be-positioned image data, and then may determine, based on a missing part of the to-be-positioned image data compared with the rendered image data, a task progress corresponding to the to-be-positioned image data.

In the pipeline network operation and maintenance scenario, after obtaining the first pose or the second pose, the computing device 310 renders rendered image data of the three-dimensional model at the first pose. The computing device 310 displays the rendered image data and the to-be-positioned image data, and then may determine a specific location of a pipeline network represented by the rendered image data in the to-be-positioned image data, so that operation and maintenance personnel can position the pipeline network in a real environment, to improve processing efficiency.

The following provides a possible implementation for constructing point cloud data in the three-dimensional model database by the computing device 310.

The computing device 310 receives a sampling density parameter input by a user, and divides, based on the sampling density parameter, a sampling region of the three-dimensional model for a site (positioning region) to which the to-be-positioned image data belongs into a plurality of sampling sub-regions. Further, the computing device 310 separately performs point cloud data sampling on the plurality of sampling sub-regions, to obtain point cloud data in the three-dimensional model database.

The point cloud data indicates a point having location information in a sampling region of the three-dimensional model.

For example, if the received sampling density parameter is 1, it indicates that the sampling region of the three-dimensional model is divided according to a unit area (for example, 1 square meter). The computing device 310 divides the sampling region of the three-dimensional model into the plurality of sampling sub-regions based on the sampling density parameter according to the unit area. For example, the sampling sub-region is a sampling region corresponding to a virtual viewpoint (viewpoint) or a region of a stereoscopic rule (cube or cuboid).

The following provides three possible examples in which the computing device 310 determines the point cloud data of the three-dimensional model.

Example 1: The computing device 310 uniformly samples a structure of the three-dimensional model at each viewpoint based on sampling regions corresponding to a plurality of determined viewpoints, to obtain point cloud data.

Example 2: The computing device 310 generates a depth image corresponding to the three-dimensional model, then samples the depth image to obtain point cloud data of the entire three-dimensional model, and further divides the point cloud data of the entire three-dimensional model into a plurality of pieces of point cloud data based on locations and angles of a plurality of viewpoints, that is, one viewpoint corresponds to one piece of point cloud data.

Example 3: The computing device 310 performs block division on the point cloud data of the entire three-dimensional model obtained in Example 2, that is, divides the point cloud data of the entire three-dimensional model into a plurality of pieces of point cloud data based on a stereoscopic rule size determined by using the density parameter.

In a possible case, a density of points in the point cloud data is determined by the computing device 310 based on an image point cloud density configured by the user. The image point cloud density and a density of viewpoints are not limited in this application.

In a possible implementation, the three-dimensional model database may further include image data or semantic data corresponding to the point cloud data. The following provides possible examples of constructing the image data or the semantic data of the three-dimensional model.

The computing device 310 obtains a BIM and samples a plurality of viewpoints in the BIM, where the plurality of viewpoints have different locations and angles in the BIM. The computing device 310 renders the BIM at each viewpoint to obtain image data or semantic data corresponding to each viewpoint.

The image data indicates a planar image in the sampling region of the three-dimensional model. The semantic data indicates semantic information in the sampling region of the three-dimensional model.

For example, the computing device 310 obtains a BIM constructed by the user on the terminal 320. A density of the plurality of viewpoints in the BIM may be set by the user. For example, the sampling density parameter that is set by the user and that is received by the computing device 310 is that a quantity of viewpoints in a unit area is greater than 1. The density is not limited in this application. The density may be that a quantity of viewpoints in a unit area is 1, greater than or equal to 2, or the like.

The following provides a possible example for determining the semantic data by the computing device 310.

When rendering the BIM at each viewpoint, the computing device 310 determines, based on ray tracing in a rendering process, an object that is in the three-dimensional model and that intersects with a ray corresponding to a pixel. The computing device 310 may obtain type information of the corresponding pixel and relative location information of a neighboring pixel based on a type of the object, and then determine to obtain the semantic data. The semantic information indicates type information of the object and relative location information of the object.

For example, the computing device 310 may display content of the semantic data in different colors based on different type information of the object. In this application, different colors are represented by using different padding.

The following provides a possible example for determining the image data by the computing device 310.

When rendering the BIM at each viewpoint, the computing device 310 determines, based on ray tracing in a rendering process, a color value of each pixel in a sampling region corresponding to the viewpoint. Then, the computing device 310 obtains a planar image in the sampling region based on the color value of each pixel.

In this application, the computing device 310 divides the sampling region of the three-dimensional model into the plurality of sampling sub-regions, to obtain the image data, the point cloud data, and the semantic data that correspond to each sampling sub-region. Therefore, when performing retrieval and registration based on the to-be-positioned image data, the computing device 310 performs processing by using a plurality of pieces of small-range point cloud data, that is, performs retrieval and registration from a plurality of pieces of small-range data by using one piece of small-range data. Therefore, efficiency and accuracy of performing retrieval and registration on the to-be-positioned image data by the computing device 310 by using the image data, the point cloud data, and the semantic data that correspond to each sampling sub-region are improved.

It should be noted that the image data, the semantic data, and the point cloud data included in the three-dimensional model database are in one-to-one correspondence. For example, image data, point cloud data, and semantic data that are at a same viewpoint correspond to one another.

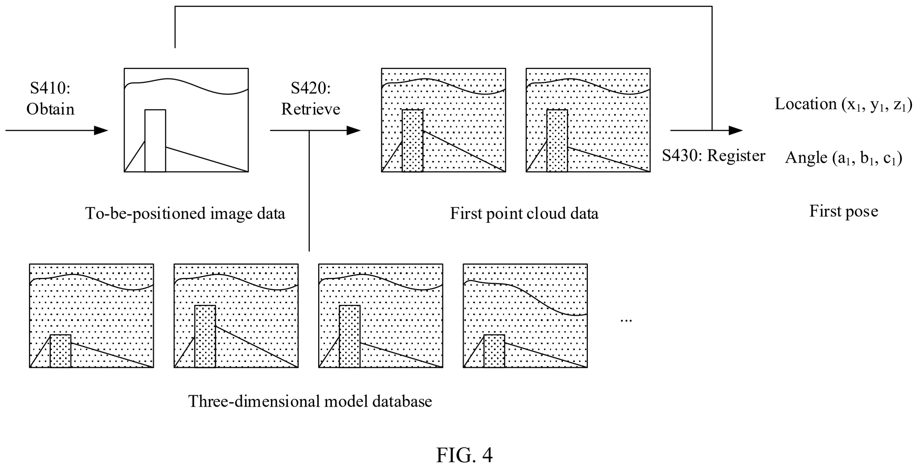

This application shows a possible implementation of a cloud technology-based positioning method. The positioning method may be applied to the computer system shown in FIG. 3. FIG. 4 is a schematic flowchart of a positioning method according to this application. An example in which a computing device performs the positioning method is used for description. The computing device may be the computing device 310 in FIG. 3, and the positioning method includes the following steps S410 to S430.

S410: The computing device 310 obtains to-be-positioned image data.

The to-be-positioned image data includes an image or a video.

In a possible case, the image included in the to-be-positioned image data carries depth information, that is, the image is a depth image.

A display angle, that is, a capture angle, of the to-be-positioned image data is described by using an example. The capture angle of the to-be-positioned image data may be 360 degrees. In other words, the to-be-positioned image data is a panoramic image. The capture angle is not limited in this application, and may alternatively be 60 degrees, 90 degrees, 100 degrees, or the like.

The following provides two possible examples for obtaining the to-be-positioned image data by the computing device 310.

Example 1: The computing device 310 obtains the to-be-positioned image data captured by a camera or a camera lens.

Example 2: The computing device 310 obtains the to-be-positioned image data sent by a terminal 320, a terminal 330, or a terminal 340.

S420: The computing device 310 retrieves the to-be-positioned image data from a three-dimensional model database, to obtain first point cloud data having a matched similarity to the to-be-positioned image data.

The three-dimensional model database is a database for a site (a positioning region) to which the to-be-positioned image data belongs.

For example, the three-dimensional model database may be the foregoing three-dimensional model database described for constructing the point cloud data in the three-dimensional model database.

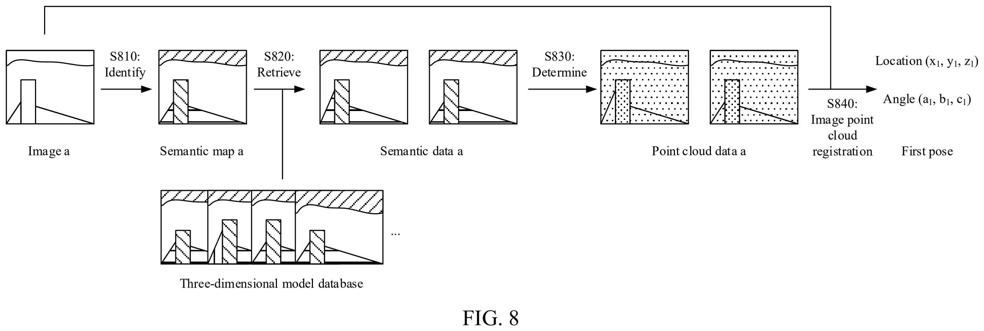

In a possible example, the positioning region may be an entire building or a partial region in a building determined by a user. For example, the positioning region may be a building with five floors, or a first floor and a second floor of the building with the five floors. For the three-dimensional model database for the positioning region to which the to-be-positioned image data belongs, refer to the following possible case shown in FIG. 8. Details are not described herein.

The following provides a possible example for determining the first point cloud data having the matched similarity to the to-be-positioned image data. The computing device 310 retrieves a plurality of pieces of point cloud data from the three-dimensional model database based on the to-be-positioned image data and a retrieval model, and determines the first point cloud data whose similarity to the to-be-positioned image data meets a first condition.

For example, the retrieval model includes a point cloud retrieval model and a semantic retrieval model. The retrieval model may be a neural network or the like, and is used to determine a similarity between an image feature of the to-be-positioned image data and point cloud data in the three-dimensional model database, and then use one or more pieces of point cloud data whose similarities meet the first condition as the first point cloud data. The first condition may be that one or more pieces of point cloud data sorted in descending order of similarities are used as the first point cloud data, or one or more pieces of point cloud data whose similarities are greater than a specified threshold are used as the first point cloud data.

The following provides a possible implementation in which the computing device 310 retrieves the to-be-positioned image data from the three-dimensional model database, to obtain the first point cloud data having the matched similarity to the to-be-positioned image data: The computing device 310 determines an image feature corresponding to the to-be-positioned image data, retrieves, from the plurality of point cloud data, point cloud data whose similarity to the image feature meets the first condition, and uses the point cloud data as the first point cloud data.

The image feature indicates a type of content in the to-be-positioned image data and a location of the content in the to-be-positioned image data.

For example, the computing device 310 retrieves, from the plurality of pieces of point cloud data based on the image feature corresponding to the to-be-positioned image data and the retrieval model, the point cloud data whose similarity to the image feature meets the first condition, and uses the point cloud data as the first point cloud data.

For example, the image feature includes semantic information or point cloud information. The semantic information may be a semantic map, and the point cloud information may be image point cloud data.

When the image feature is semantic information, the computing device 310 retrieves, by using the semantic retrieval model, first semantic data that is in the three-dimensional model database and whose similarity to the semantic information meets the first condition. Then, the computing device 310 determines a viewpoint corresponding to the first semantic data, and uses point cloud data at the viewpoint as the first point cloud data.

When the image feature is semantic information, for content that the computing device 310 retrieves the first semantic data that is in the three-dimensional model database and whose similarity to the semantic information meets the first condition, refer to content in FIG. 8 below. Details are not described herein.

When the image feature is point cloud information, the computing device 310 retrieves, by using the point cloud retrieval model, first point cloud data that is in the three-dimensional model database and whose similarity to the point cloud information meets the first condition.

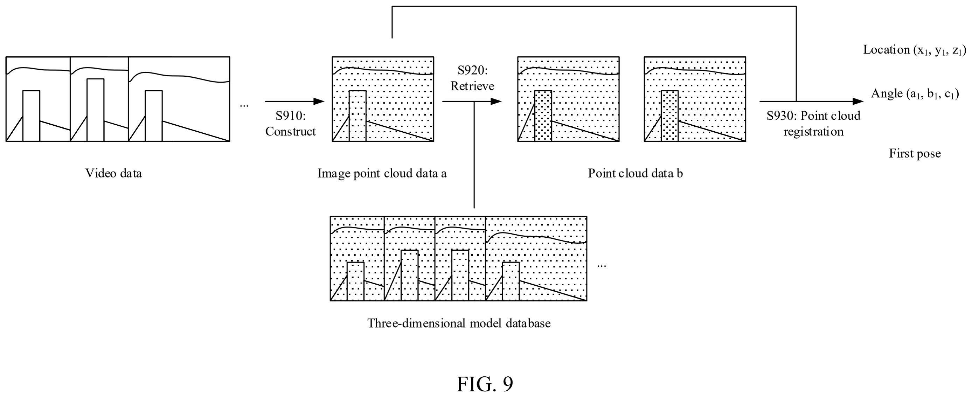

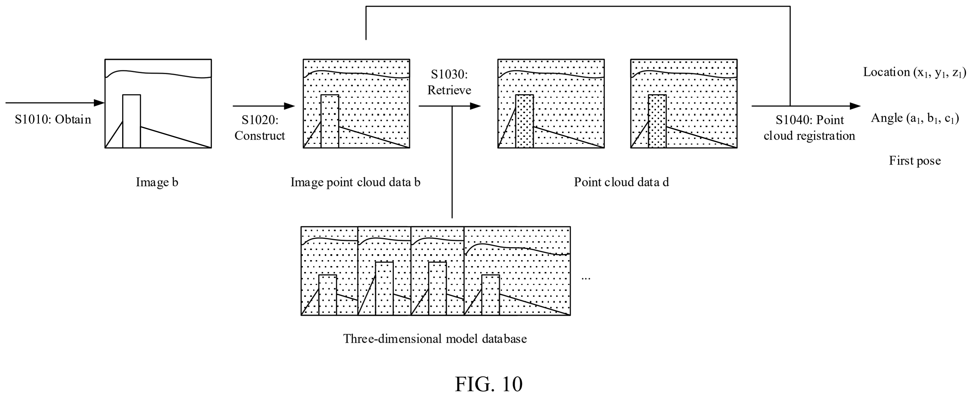

When the image feature is point cloud information, for content that the computing device 310 retrieves the first point cloud data that is in the three-dimensional model database and whose similarity to the point cloud information meets the first condition, refer to content in FIG. 9 or FIG. 10 below. Details are not described herein.

In this embodiment of this application, the computing device 310 obtains the first point cloud data from the three-dimensional model database through retrieval by using the image feature of the to-be-positioned image data, to avoid subsequent registration between the to-be-positioned image data and all point cloud data in the three-dimensional model database, and reduce an amount of data to be processed, thereby improving a subsequent registration speed and improving positioning efficiency of the to-be-positioned image data.

S430: The computing device 310 performs registration on the to-be-positioned image data by using the first point cloud data, to obtain a first pose corresponding to the to-be-positioned image data.

The first pose includes a location $(x_1, y_1, z_1)$ of the to-be-positioned image data in the positioning region, and an angle $(a_1, b_1, c_1)$ of the to-be-positioned image data in the positioning region.

The following provides two possible implementations in which the computing device 310 performs registration on the first point cloud data and the to-be-positioned image data.

In a first possible implementation, if the first point cloud data includes one piece of point cloud data, or the computing device 310 is configured not to perform point cloud data screening, the computing device 310 performs registration on all point cloud data included in the first point cloud data and the to-be-positioned image data.

In a second possible implementation, if the first point cloud data includes a plurality of pieces of point cloud data, the computing device 310 may correspondingly generate a processing interface of the first point cloud data, receive a trigger operation of the user on the processing interface, and then in response to the trigger operation, determine to-be-registered point cloud data selected by the user from the first point cloud data. Therefore, the computing device 310 performs registration on the to-be-positioned image data by using the to-be-registered point cloud data.

The following provides three possible examples for a representation form of the processing interface.

Example 1: The processing interface is a location, in the three-dimensional model, of a viewpoint corresponding to the first point cloud data.

Example 2: The processing interface is a distribution heat map obtained based on a location, in the three-dimensional model, of a viewpoint corresponding to the first point cloud data. The distribution heat map indicates a density of points, in the first point cloud data, having location information in the three-dimensional model for the positioning region, that is, a density of viewpoints, in the three-dimensional model, corresponding to the first point cloud data.

For example, in the distribution heat map, a darker-color region indicates that the viewpoints corresponding to the first point cloud data are denser in the region, a lighter-color region indicates that the viewpoints corresponding to the first point cloud data are more discrete in the region, and a colorless region or a white region indicates that there is no viewpoint corresponding to the first point cloud data.

Example 3: The processing interface is the first point cloud data or image data of the first point cloud data at a corresponding viewpoint.

For example, the trigger operation is a tapping or sliding operation of the user on the computing device 310 or on a front end corresponding to the computing device 310. In response to the trigger operation, the computing device 310 determines that the user selects one or more pieces of first point cloud data to perform no registration, or selects one or more pieces of first point cloud data to perform registration, to finally obtain the to-be-registered point cloud data.

In this application, the user performs the trigger operation on the processing interface corresponding to the first point cloud data, and then the to-be-registered point cloud data is determined from the first point cloud data, to reduce a quantity of point cloud data during subsequent registration, thereby reducing an amount of data to be processed by the computing device 310 and improving positioning efficiency.

For the foregoing registration process, registration on the to-be-positioned image data and the to-be-registered point cloud data is used as an example to describe registration on the to-be-positioned image data and the to-be-registered point cloud data or the first point cloud data.

The computing device 310 performs registration on the to-be-positioned image data and the to-be-registered point cloud data by using a registration model, to obtain a location relationship between a point in the to-be-positioned image data and a point in the to-be-registered point cloud data. The computing device 310 obtains a first pose of the to-be-positioned image data based on the location relationship and the location information of each point in the point cloud data.

If point cloud registration is performed on one piece of to-be-registered point cloud data and the to-be-positioned image data, the computing device 310 may directly obtain the first pose corresponding to the to-be-positioned image data.

If point cloud registration is performed on a plurality of pieces of to-be-registered point cloud data and the to-be-positioned image data, the following shows two examples of determining the first pose.

Example 1: The computing device 310 uses, as the first pose, a location and an angle that correspond to to-be-registered point cloud data having a highest registration similarity with the to-be-positioned image data.

Example 2: The computing device 310 performs weighted summation based on locations and angles that correspond to the plurality of pieces of to-be-registered point cloud data, to obtain the first pose. Weights of the location and the angle that correspond to the to-be-registered point cloud data are determined based on a similarity between the to-be-registered point cloud data and the to-be-positioned image data in S420.

For example, if similarities between three pieces of to-be-registered point cloud data and the to-be-positioned image data are 0.8, 0.7, and 0.6 in sequence, weights 0.5, 0.3, and 0.2 are successively assigned to the three pieces of to-be-registered point cloud data. The foregoing assignment is merely an example, and should not be understood as a limitation on this application. In another example of this application, another assignment rule may be alternatively used. For example, weights 0.6, 0.3, and 0.1 are sequentially assigned to the three pieces of to-be-registered point cloud data.

For example, the registration model includes a point cloud registration model and an image point cloud registration model. The point cloud registration model is used to determine a location relationship between two pieces of point cloud data. The image point cloud registration model is used to determine a location relationship between point cloud data and an image. The location relationship may be a relative pose between pieces of point cloud data or between an image and point cloud data.

The following provides two possible examples for the foregoing process in which the computing device 310 uses the registration model.

Example 1: The computing device 310 performs image point cloud registration on the to-be-positioned image data and the to-be-registered point cloud data by using the image point cloud registration model, to obtain the first pose corresponding to the to-be-positioned image data.

For descriptions of performing image point cloud registration on the to-be-positioned image data and the to-be-registered point cloud data by the computing device 310 by using the image point cloud registration model, to obtain the first pose corresponding to the to-be-positioned image data, refer to content of S840 in FIG. 8. Details are not described herein.

Example 2: The computing device 310 performs, by using the point cloud registration model, point cloud registration on the image point cloud data corresponding to the to-be-positioned image data and the to-be-registered point cloud data, to obtain the first pose corresponding to the to-be-positioned image data.

For descriptions of performing point cloud registration on the image point cloud data corresponding to the to-be-positioned image data and the to-be-registered point cloud data by the computing device 310 by using the point cloud registration model, to obtain the first pose corresponding to the to-be-positioned image data, refer to content of S930 in FIG. 9 below. Details are not described herein.

For the first pose, this application further provides a possible implementation of optimizing the first pose. The three-dimensional model database further includes image data corresponding to the point cloud data, and the image data indicates a planar image in the sampling region of the three-dimensional model for the site to which the to-be-positioned image data belongs. FIG. 5 is a schematic flowchart of a method for optimizing a first pose according to this application. FIG. 5 shows a method used by a computing device to optimize the first pose obtained by using the foregoing positioning method. An example in which the computing device performs the method for optimizing a first pose is used for description. The computing device may be the computing device 310 in FIG. 3. The method includes the following steps S510 and S520.

S510: The computing device 310 determines a first multi-level feature of to-be-positioned image data and a second multi-level feature of a planar image corresponding to first point cloud data.

The multi-level feature indicates a feature combination obtained by undergoing feature extraction networks with different quantities of layers.

For example, as shown in FIG. 5, the computing device 310 inputs the to-be-positioned image data and the planar image at a viewpoint corresponding to the first point cloud data into a feature extraction network model. Each time the to-be-positioned image data and the planar image corresponding to the first point cloud data undergo one layer of feature extraction network, a group of features is output. The computing device 310 combines the features output by the layers, to obtain the first multi-level feature and the second multi-level feature.

For example, the feature extraction network model may include a multi-layer feature extraction network, and the feature extraction network may be a convolutional layer.

An example in which the computing device 310 determines the first multi-level feature of the to-be-positioned image data is used for description of determining the first multi-level feature and the second multi-level feature.

The computing device 310 inputs the to-be-positioned image data into a feature extraction network model having three groups of convolutional layers, and outputs a first-level feature after the to-be-positioned image data undergoes a first group of convolutional layers (a convolutional layer 501, an activation layer 502, and a pooling layer 503). In addition, the first-level feature is further processed by a second group of convolutional layers (a convolutional layer 504, an activation layer 505, and a pooling layer 506), and a second-level feature is output. The second-level feature is then processed by a third group of convolutional layers (a convolutional layer 507, an activation layer 508, and a pooling layer 509), to obtain a third-level feature. The computing device combines the first-level feature, the second-level feature, and the third-level feature to obtain the first multi-level feature.

A shallow-layer feature (for example, the first-level feature or the second-level feature) has high resolution, and includes location information, detail information, and the like of more content in an image, but has less semantic information and more interference information. A deep-layer feature (for example, the third-level feature) has stronger semantic information and less interference information, but has low resolution and lacks detail information. The activation layer may use a Relu activation function, and the pooling layer may use maxpooling.

It should be noted that a quantity of layers and a structure of the feature extraction network model are merely examples, and should not be understood as a limitation on this application. In another case, five or six groups of convolutional layers may be included, or the structure of the feature extraction network model does not have the activation layer, the pooling layer, or the like, or the activation layer uses softmax, the pooling layer uses average pooling, or the like.

S520: The computing device 310 calibrates the first pose based on the first multi-level feature and the second multi-level feature to obtain a second pose.

The computing device 310 processes the first multi-level feature and the second multi-level feature by using a coarse alignment network (coarse alignment network) and a fine alignment network (fine alignment network), to continuously optimize the first pose to obtain the second pose. The second pose includes a location $(x_2, y_2, z_2)$ of the to-be-positioned image data in the three-dimensional model, and an angle $(a_2, b_2, c_2)$ of the to-be-positioned image data in the three-dimensional model. The second pose further indicates a location and an angle of a capture point of the to-be-positioned image data in the positioning region corresponding to the three-dimensional model.

One layer of a plurality of layers of coarse alignment networks is used as an example for description. The computing device 310 calculates residual weights of the first multi-level feature and the second multi-level feature, and residual features of the first multi-level feature and the second multi-level feature. The computing device 310 performs linear regression by using the residual weights, the residual features, and an attenuation coefficient, to obtain a deviation value of the first pose. The computing device 310 may obtain an output of the layer, that is, an optimized location and an optimized angle, based on the deviation value and the first pose.

One layer of a plurality of layers of fine alignment networks is used as an example for description. The computing device 310 uses the optimized location and the optimized angle as an input of a next-layer fine alignment network, and projects a point cloud on the first point cloud data to the first multi-level feature of the to-be-positioned image data based on the optimized location and the optimized angle. The computing device 310 calculates an error between the first multi-level feature of the to-be-positioned image data to which the point cloud is projected and the second multi-level feature, determines a deviation value based on the error, and further obtains a further optimized location and a further optimized angle by using the deviation value. The computing device 310 repeats the foregoing operations until the error converges to obtain the second pose.

In this application, the computing device 310 optimizes the first pose to obtain the second pose, so that a more accurate location and angle of the capture point corresponding to the to-be-positioned image data in the positioning region is obtained, and the to-be-positioned image data is positioned more accurately, to improve positioning accuracy.

In a possible embodiment, the computing device 310 may optimize the first pose by using the image data corresponding to the to-be-registered point cloud data, to obtain the second pose. For content of optimizing the first pose by the computing device 310 by using the image data corresponding to the to-be-registered point cloud data, to obtain the second pose, refer to content in FIG. 5 above. Details are not described herein again.

This application further shows the following three scenarios in which a positioning result (the first pose or the second pose) is used.

Example 1: In a positioning scenario, the computing device 310 performs positioning and navigation by using the positioning result.

For example, in a moving process, the computing device 310 continuously obtains a positioning result, to determine, in real time, a location of a capture point corresponding to the computing device 310 in the positioning region corresponding to the three-dimensional model, and performs positioning and navigation for the computing device 310.

An example in which the computing device 310 is a robot is used for description. The robot obtains a positioning result, and may determine a location of the robot in the positioning region, so that the robot may determine a navigation route based on the location and a destination location to which the robot is to reach, and perform navigation based on the navigation route. In a navigation process, the location of the robot in the positioning region is further determined in real time, to continuously correct a motion parameter of the robot, or optimize the navigation route.

Example 2: In a task progress comparison scenario, the computing device 310 performs task progress comparison by using the positioning result.

The computing device 310 renders an image of the three-dimensional model at the positioning result, to obtain rendered image data. The rendered image data indicates a final form of a task.

In a possible case, when receiving a separate display instruction triggered by the user, the computing device 310 separately displays the rendered image data of the three-dimensional model at the positioning result and the to-be-positioned image data.

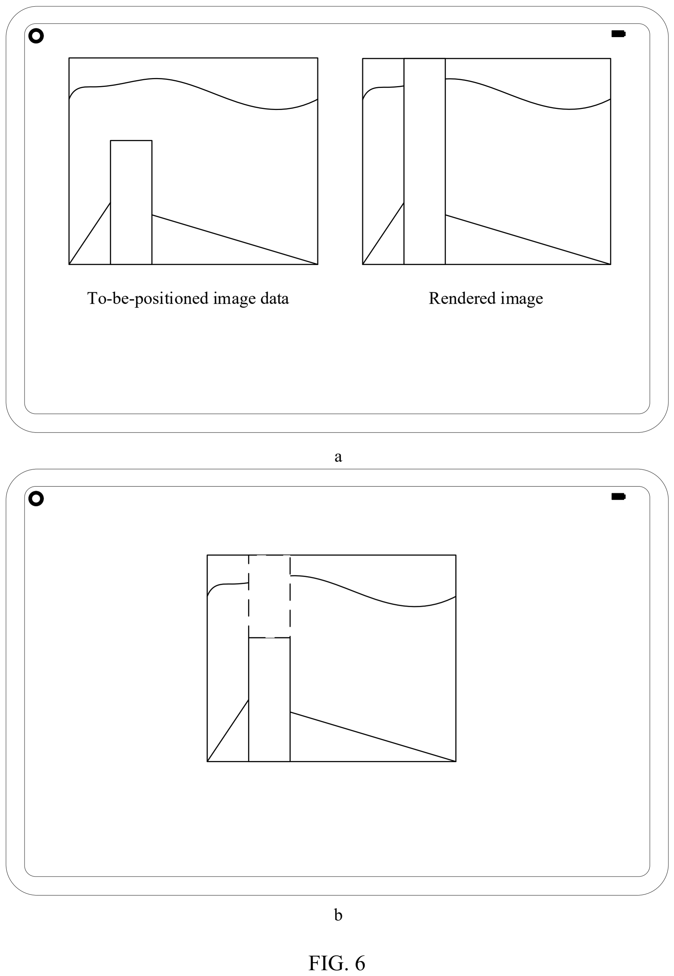

An example in which the foregoing task is a construction project is used for description. FIG. 6 is a diagram 1 of a display interface according to this application. In a in FIG. 6, the computing device 310 separately displays the to-be-positioned image data and the rendered image data, and the rendered image data shows a final completed form of the construction project. Compared with the rendered image data, in the to-be-positioned image data, a "column" in the to-be-positioned image data is not completed, that is, a column in the construction project is not fully poured.

In another possible case, when receiving a comparison display instruction triggered by the user, the computing device 310 comparatively displays the rendered image data of the three-dimensional model at the positioning result and the to-be-positioned image data.

As shown in b in FIG. 6, the computing device 310 comparatively displays the to-be-positioned image data and the rendered image data. A dashed line shown in b in FIG. 6 indicates that the "column" in the to-be-positioned image data is not completed, so that a progress of the construction project corresponding to the to-be-positioned image data can be clearly obtained through comparison.

In this application, because both the to-be-positioned image data and the rendered image data correspond to the first pose, or both the to-be-positioned image data and the rendered image data correspond to the second pose, the rendered image data and the to-be-positioned image data partially overlap. The computing device 310 may obtain a difference of the to-be-positioned image data compared with the rendered image data based on a missing part of the separately or comparatively displayed to-be-positioned image data compared with the rendered image data. This helps the user determine the task progress while implementing visualization.

In a possible embodiment, the computing device 310 may display only the rendered image data.

Example 3: In a pipeline network operation and maintenance scenario, the computing device 310 performs pipeline network operation and maintenance by using the positioning result.

For example, the computing device 310 renders the rendered image data of the three-dimensional model at the positioning result, and separately or comparatively displays the rendered image data and the to-be-positioned image data based on the separate display instruction or the comparison display instruction triggered by the user. The rendered image data indicates a pipeline network layout in a real environment corresponding to the three-dimensional model.

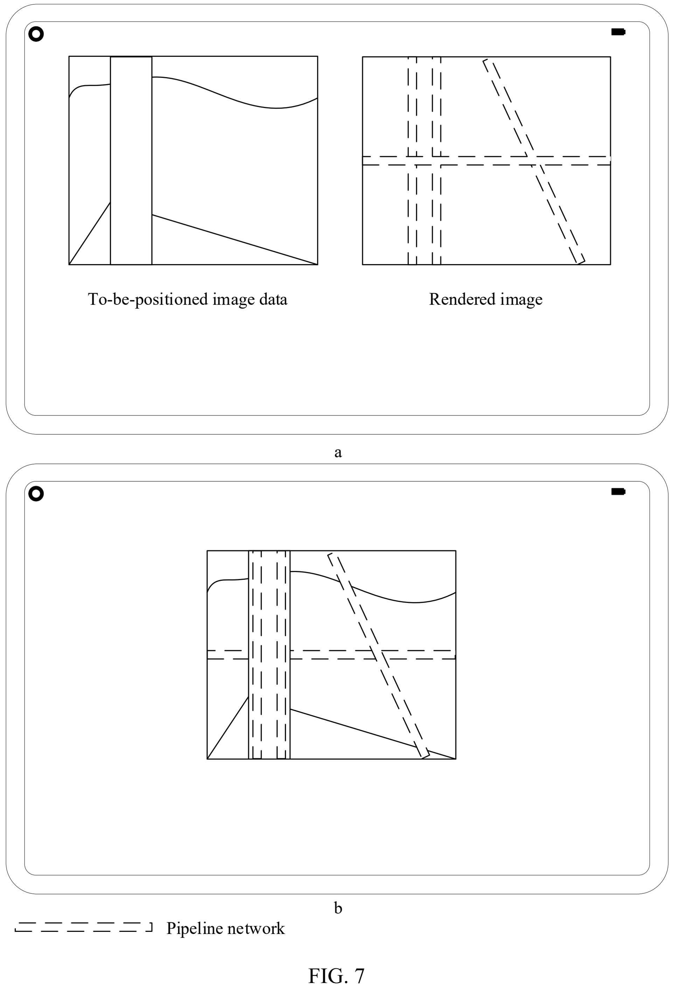

A pipeline network in a building is used as an example for description. FIG. 7 is a diagram 2 of a display interface according to this application. As shown in a in FIG. 7, the computing device 310 separately displays the to-be-positioned image data and the rendered image data. The rendered image data shows a pipeline network layout in a building. For example, a dashed box shown in a in FIG. 7 is a pipeline network.

As shown in b in FIG. 7, the computing device 310 comparatively displays the to-be-positioned image data and the rendered image data, and then may accurately determine a location of the pipeline network in the to-be-positioned image data, so that operation and maintenance personnel can perform troubleshooting.

In this application, the computing device 310 may obtain, by displaying the rendered image data and the to-be-positioned image data, the pipeline network hidden in the to-be-positioned image data and the specific location of the pipeline network in the to-be-positioned image data, so that the operation and maintenance personnel can perform operation and maintenance management on the pipeline network.

Based on the schematic flowchart of the positioning method shown in FIG. 4, if the to-be-positioned image data is a single image (an image a), and the image feature is semantic information, the three-dimensional model database further includes semantic data corresponding to the three-dimensional model at each of a plurality of viewpoints, and the semantic data is in one-to-one correspondence with the point cloud data. This application provides a possible implementation of image positioning. FIG. 8 is a schematic flowchart 1 of an image positioning method according to this application. An example in which semantic information of to-be-positioned image data may be referred to as a semantic map a, first semantic data having a matched similarity to the semantic information of the to-be-positioned image data may be referred to as semantic data a, and first point cloud data corresponding to the first semantic data may be referred to as point cloud data a is used for description. An example in which the computing device performs the image positioning method is used for description. The computing device may be the computing device 310 in FIG. 3, and the method includes the following steps S810 to S840.

S810: The computing device 310 identifies a type of content in an image a and a location of the content in the image a, to obtain the semantic map a.

The computing device 310 identifies, by using an image semantic segmentation model, the type of the content in the image a and a relative location of the content in the image a, to obtain the semantic map a corresponding to the image a. Different colors in the semantic map a are represented by using different padding.

For example, the image semantic segmentation model may be a fully convolutional network (fully convolutional network, FCN), a U-Net, a deeplabv3+ model, or the like.

A network structure of the FCN includes a fully convolutional layer, a deconvolutional layer, and a jump structure. The jump structure is a cross-layer connection structure, so that fine-grained information of a shallow network layer and coarse-grained information of a deep network layer can be combined to implement a precise segmentation task. A network structure of the U-Net includes an encoding layer (encoder) and a decoding layer (decoder). The encoder is used for feature extraction, and the decoder is used for upsampling.

S820: The computing device 310 retrieves the semantic data a that is in a three-dimensional model database and whose similarity to the semantic map a meets a first condition.

The three-dimensional model database is a database of a positioning region to which the image a belongs.

The computing device 310 retrieves, by using a semantic retrieval model, a plurality of pieces of semantic data from the three-dimensional model database, to obtain one or more pieces of semantic data a whose similarity to the semantic map a meets the first condition.

For example, the first condition is that first K pieces of semantic data with a highest similarity are used as the semantic data a.

The computing device 310 determines a similarity between the semantic map a and each of the plurality of pieces of semantic data by using the semantic retrieval model based on the semantic map a and a type of content and a relative location of the content in the plurality of pieces of semantic data, and uses first K pieces of semantic data having a highest similarity to the semantic map a as the semantic data a.

For example, the semantic retrieval model may be a hash (hash) algorithm, a comparison learning-based image retrieval model (self-supervising fine-grained region similarities, SFRS), a classification algorithm-based image retrieval model (CosPlace), or the like.

The hash algorithm is to extract an image feature by using a feature extraction model, and map the image feature to a vertex of a hypercube, that is, convert a floating-point encoding vector into a 01 two-dimensional vector. Further, a distance between two-dimensional vectors of two images is determined, and a similarity between the two images may be determined. The distance may be Hamming distance (hamming distance) or Euclidean distance (euclidean distance).

In a possible case, the plurality of pieces of semantic data retrieved by the computing device 310 from the three-dimensional model database are determined by the user in advance. In other words, the user determines a plurality of pieces of semantic data corresponding to a plurality of viewpoints for retrieval from all viewpoints in the three-dimensional model data.

For example, the three-dimensional model is a building with five floors, and a plurality of viewpoints are sampled on each floor. The computing device 310 receives a first floor and a second floor in the five floors configured by the user, and therefore, during retrieval, only a plurality of pieces of semantic data corresponding to a plurality of viewpoints included in the first floor and the second floor are used. This avoids retrieval from the entire building with the five floors, reduces an amount of data to be retrieved, and improves retrieval efficiency.

S830: The computing device 310 determines that the semantic data a corresponds to the point cloud data a at the viewpoint.

For example, the three-dimensional model database may be the foregoing three-dimensional model database described for constructing point cloud data, semantic data, or image data. Because the three-dimensional model database includes image data, semantic data, and point cloud data that separately correspond to a plurality of viewpoints in the three-dimensional model, or there is a correspondence between image data and semantic data at a same viewpoint and point cloud data obtained through block division. Therefore, the computing device 310 may determine, based on the semantic data a, the corresponding image data a and the corresponding point cloud data a in the three-dimensional model database.

S840: The computing device 310 performs image point cloud registration by using the image a and the point cloud data a, to obtain the first pose corresponding to the image a.

For example, the computing device 310 performs image point cloud registration on the image a by using the image point cloud registration model and the point cloud data a, to determine the first pose corresponding to the image a.

The image point cloud registration model may be a DeepI2P model or the like. The DeepI2P model transforms a registration problem into a classification and inverse camera projection optimization problem. A classification neural network in DeepI2P is used to mark a location interval of a projection of each point in a point cloud relative to a camera. The marked point is input into an inverse camera projection solver in DeepI2P to estimate a relative pose and then obtain the first pose.

In this application, the computing device 310 retrieves the three-dimensional model database based on the semantic map a of the image a, and performs retrieval based on a type of content in the image a and a relative location feature of the content in the image a, to obtain point cloud data having a matched similarity to the image a. This avoids that the computing device 310 performs image point cloud registration by using all point cloud data, reduces a computing amount of image point cloud registration, improves a speed of image point cloud registration, and improves positioning efficiency.

Based on the schematic flowchart of the positioning method shown in FIG. 4, if the to-be-positioned image data is a video, the to-be-positioned image data may be referred to as video data. This application further provides two possible implementations of video positioning.

In a possible implementation, FIG. 9 is a schematic flowchart of a video positioning method according to this application. The image feature may further include point cloud information (image point cloud data a), and point cloud data whose similarity to the point cloud information meets a first condition may be referred to as point cloud data b. An example in which a computing device performs the video positioning method is used for description. The computing device may be the computing device 310 in FIG. 3, and the method includes the following steps S910 to S930.

S910: The computing device 310 constructs image point cloud data a corresponding to video data.

The computing device 310 constructs a point cloud corresponding to content in the video data by using SfM or SLAM, to obtain the image point cloud data a.

The SLAM is used as an example to describe the SLAM and the SfM. The computing device 310 uses the SLAM to determine, from a plurality of images of the video data, that a map feature (for example, a wall corner and a column) repeatedly appears in the plurality of images, to position the computing device 310, and then generates a point cloud in an incremental manner based on the location of the computing device 310, to determine a relative pose of each frame of the video data, that is, a relative pose between points, to obtain the image point cloud data a.

In a possible case, the computing device 310 determines a signal-to-noise ratio of the image point cloud data a, and determines, based on the signal-to-noise ratio, a quantity of point cloud data b that needs to be retrieved during subsequent retrieval.

For example, the signal-to-noise ratio is a peak signal-to-noise ratio (peak signal-to-noise ratio, PSNR) of complete image point cloud data. A larger signal-to-noise ratio indicates a smaller quantity of point cloud data b that needs to be subsequently retrieved. A smaller signal-to-noise ratio indicates a larger quantity of point cloud data b that needs to be subsequently retrieved.

S920: The computing device 310 retrieves point cloud data b that is in a three-dimensional model database and whose similarity to the image point cloud data a meets a first condition.

The computing device 310 retrieves, by using a point cloud retrieval model, the point cloud data b that matches the image point cloud data a from a plurality of pieces of point cloud data in a three-dimensional model database.

For example, the point cloud retrieval model is a DCP (deep closest point) model. The computing device 310 determines, by using the DCP model, similarities between a plurality of pieces of point cloud data in three-dimensional model data and the image point cloud data a, and uses first K pieces of point cloud data with a highest similarity to the image point cloud data a as the point cloud data b.

In a possible case, the point cloud data retrieved by the computing device 310 from the three-dimensional model database is determined by the user in advance. In other words, the user determines a plurality of pieces of point cloud data for retrieval from all point cloud data in the three-dimensional model database.

S930: The computing device 310 performs point cloud registration on the image point cloud data a by using the point cloud data b, to obtain a first pose corresponding to the video data.

The computing device 310 performs point cloud registration on the image point cloud data a by using a point cloud registration model and the point cloud data b, to determine a pose corresponding to each frame of image in the video data, that is, a movement trajectory of the video data.

The following provides two possible examples for the point cloud registration model.

Example 1: The point cloud registration model may be a rigid registration algorithm. The rigid registration means that two point sets are given, rigid registration generates rigid transformation, and the transformation maps one point set to another point set. The rigid transformation is defined as transformation that does not change a distance between any two points, and the transformation usually includes only translation and rotation. The rigid registration algorithm is, for example, an ICP (iterative closest point) algorithm.

Example 2: The point cloud registration model may be a non-rigid registration algorithm. The non-rigid registration means that two point sets are given, and the non-rigid registration generates non-rigid transformation, and the transformation maps one point set to another point set. The non-rigid transformation includes affine transformation, such as scaling and clipping, and may also involve other nonlinear transformation. The non-rigid registration algorithm is, for example, a KC (kernel correlation) algorithm.

In this application, the computing device 310 retrieves the three-dimensional model database based on the image point cloud data a of the video data, and matches a point having location information in the image point cloud data a with a point having location information in the plurality of pieces of point cloud data included in the three-dimensional model database, to obtain the point cloud data b, that is, retrieves, from a plurality of pieces of small-range data, data that matches one piece of small-range data. Therefore, a computing amount of point cloud registration is reduced, and a speed of point cloud registration is improved. In addition, both the image point cloud data a and the point cloud data have points having location information. Therefore, the computing device 310 performs matching based on the points, so that the speed of point cloud registration can be improved, thereby improving positioning efficiency.

In another possible implementation, the computing device 310 determines, by using a first frame image in the video data, a semantic map b of the first frame image, and retrieves semantic data (semantic data b) that is in the three-dimensional model data and whose similarity to the semantic map b meets the first condition. The computing device 310 determines point cloud data (point cloud data c) corresponding to the semantic data b, and performs point cloud registration by using the first frame image and the point cloud data c, to obtain a location and a capture angle, in the positioning region, corresponding to the first frame image in the video data.

Then, the computing device 310 constructs, by using SfM or SLAM, image point cloud data corresponding to the video data, to obtain a relative pose between points in the image point cloud data.

The computing device 310 may obtain, based on the location and the capture angle that correspond to the first frame image and the relative pose between points in the video data, the first pose corresponding to each frame image in the video data.

For content in which the computing device 310 determines the location and the capture angle of the first frame image in the corresponding three-dimensional model, refer to the content shown in FIG. 8. For descriptions in which the computing device 310 determines the relative pose of each frame in the video data, refer to the content of S910 in FIG. 9. Details are not described herein again.

Based on the schematic flowchart of the positioning method shown in FIG. 4, if the to-be-positioned image data is a single image, and the single image has depth information, the image feature may further include point cloud information. This application further provides a possible implementation of image positioning. FIG. 10 is a schematic flowchart 2 of an image positioning method according to this application. The to-be-positioned image data may be referred to as an image b, point cloud information of the to-be-positioned image data referred to as image point cloud data b, and point cloud data whose similarity to the point cloud information meets a first condition may be referred to as point cloud data d. An example in which a computing device performs the image positioning method is used for description. The computing device may be the computing device 310 in FIG. 3, and the method includes the following steps S1010 to S1040.

S1010: The computing device 310 obtains the image b.

The following shows two possible examples for the computing device 310 obtaining the image b.

Example 1: The computing device 310 may obtain the image b by using a panoramic depth camera.

Example 2: The computing device 310 obtains the image b by using a panoramic camera and a depth camera (red green blue deep camera, RGBD camera).

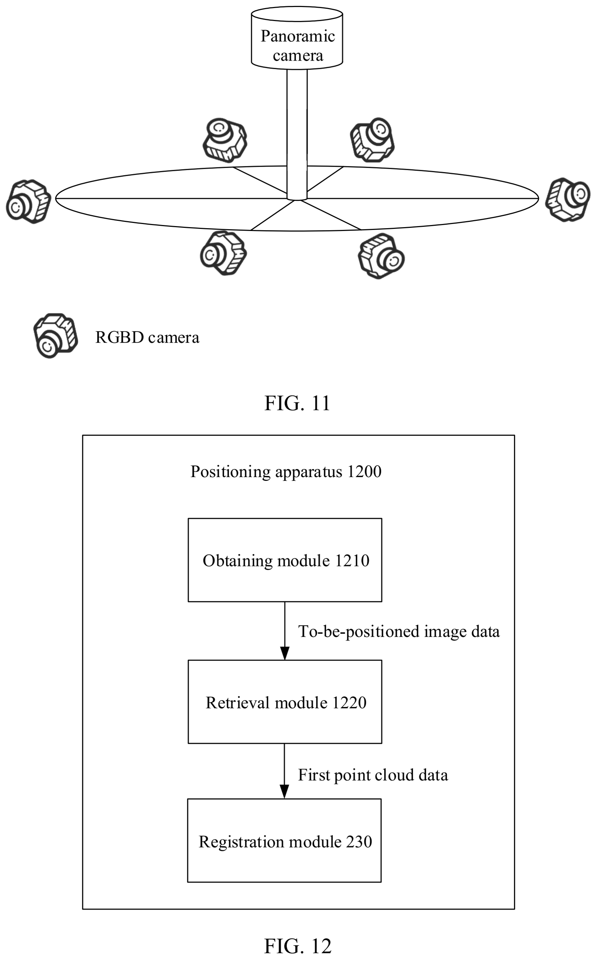

FIG. 11 is a diagram of a structure of a camera according to this application, and shows an imaging system with a panoramic camera and a multi-RGBD-rig, that is, an imaging system with a plurality of RGBD cameras disposed around the panoramic camera. The computing device 310 correspondingly obtains one panoramic image and a plurality of depth images by using the panoramic camera and the RGBD camera. The computing device 310 splices the plurality of depth images to obtain a panoramic depth image, and calibrates the panoramic depth image by using the panoramic image, to obtain the image b.

S1020: The computing device 310 constructs the image point cloud data b corresponding to the image b.

The following provides two possible examples for constructing, by the computing device 310, the image point cloud data b corresponding to the image b.

Example 1: The computing device 310 constructs the corresponding image point cloud data b based on depth information carried in the image b.

Example 2: The computing device 310 obtains a panoramic image by using the panoramic camera, extracts point clouds for a surrounding environment by using the plurality of RGBD cameras, and splices the point clouds corresponding to the plurality of RGBD cameras, to obtain a panoramic point cloud.

The computing device 310 performs image point cloud registration on the panoramic point cloud and the panoramic image by using an image point cloud registration model, to filter out an abnormal point cloud in the panoramic point cloud. The computing device 310 further transforms the panoramic point cloud obtained after the abnormal point cloud is filtered out to a coordinate system of the panoramic camera, so that coordinates of the panoramic image correspond to coordinates of the panoramic point cloud obtained after the abnormal point cloud is filtered out, to obtain the image point cloud data b.

S1030: The computing device 310 retrieves the point cloud data d that is in the three-dimensional model database and whose similarity to the image point cloud data b meets the first condition.

S1040: The computing device 310 performs point cloud registration by using the image point cloud data b and the point cloud data d, to obtain a first pose.

For content of S1030 and S1040 performed by the computing device 310, refer to the descriptions of S920 and S930 shown in FIG. 9. Details are not described herein again.

In this embodiment of this application, because the image b has the depth information, the image point cloud data b may be directly constructed based on the image b. The three-dimensional model database is retrieved based on the image point cloud data b, to obtain the point cloud data d. This avoids that the computing device 310 performs point cloud registration by using all point cloud data, reduces a computing amount of point cloud registration, improves a speed of point cloud registration, and improves positioning efficiency.

In another embodiment of this application, interaction between the computing device 310 and the terminal 320 is used as an example for description. The computing device 310 is a cloud server. The terminal 320 collects to-be-positioned image data by using a camera or a camera lens, and sends the to-be-positioned image data to the computing device 310. The computing device 310 retrieves a three-dimensional model database based on the obtained to-be-positioned image data, to obtain first point cloud data having a matched similarity to the to-be-positioned image data. Further, point cloud registration is performed on the to-be-positioned image data by using the first point cloud data, to obtain the first pose corresponding to the to-be-positioned image data. In addition, the terminal 320 may display first rendered image data of a three-dimensional model at the first pose.

In a possible case, the computing device 310 optimizes the first pose to obtain a second pose, and the terminal 320 may further display second rendered image data of the three-dimensional model at the second pose.

For descriptions in which the computing device 310 determines the first pose or the second pose, refer to the content shown in FIG. 4 to FIG. 10. Details are not described herein again.

The following provides two possible examples for displaying, by the terminal 320, the first rendered image data of the three-dimensional model at the first pose or the second rendered image data of the three-dimensional model at the second pose.

Example 1: After the computing device 310 obtains the first pose or the second pose, the computing device 310 sends the first pose or the second pose to the terminal 320. The terminal 320 renders an image of the three-dimensional model at the first pose or the second pose, to obtain the first rendered image data or the second rendered image data. The terminal 320 may comparatively or separately display the first rendered image data and the to-be-positioned image data, or comparatively or separately display the second rendered image data and the to-be-positioned image data.

Example 2: The computing device 310 renders an image of the three-dimensional model at the first pose or the second pose, to obtain the first rendered image data or the second rendered image data, and sends the first rendered image data or the second rendered image data to the terminal 320. The terminal 320 separately or comparatively displays the first rendered image data and the to-be-positioned image data, or separately or comparatively displays the second rendered image data and the to-be-positioned image data.

In a possible case, the terminal 320 further displays only the to-be-positioned image data.

The foregoing describes in detail the positioning method provided in this application with reference to FIG. 1 to FIG. 10. The following describes a positioning apparatus provided in this application with reference to FIG. 12. FIG. 12 is a diagram 1 of a structure of a cloud technology-based positioning apparatus according to this application. A positioning apparatus 1200 may be configured to implement functions of the computing device 310 in the foregoing method embodiments, and therefore can also achieve the beneficial effects of the foregoing method embodiments.

As shown in FIG. 12, the positioning apparatus 1200 includes an obtaining module 1210, a retrieval module 1220, and a registration module 1230. The positioning apparatus 1200 is configured to implement functions of the computing device 310 in the method embodiments corresponding to FIG. 1 to FIG. 10. In a possible example, a specific process in which the positioning apparatus 1200 is configured to implement the foregoing positioning method includes the following process:

The obtaining module 1210 is configured to obtain to-be-positioned image data, where the to-be-positioned image data includes an image or a video.

The retrieval module 1220 is configured to retrieve the to-be-positioned image data from a three-dimensional model database, to obtain first point cloud data having a matched similarity to the to-be-positioned image data. The three-dimensional model database includes a plurality of pieces of point cloud data obtained by sampling a three-dimensional model for a site to which the to-be-positioned image data belongs, and the point cloud data indicates a point having location information in a sampling region of the three-dimensional model.

The registration module 1230 is configured to perform registration on the to-be-positioned image data based on a point having location information in the first point cloud data, to obtain a first pose corresponding to the to-be-positioned image data.

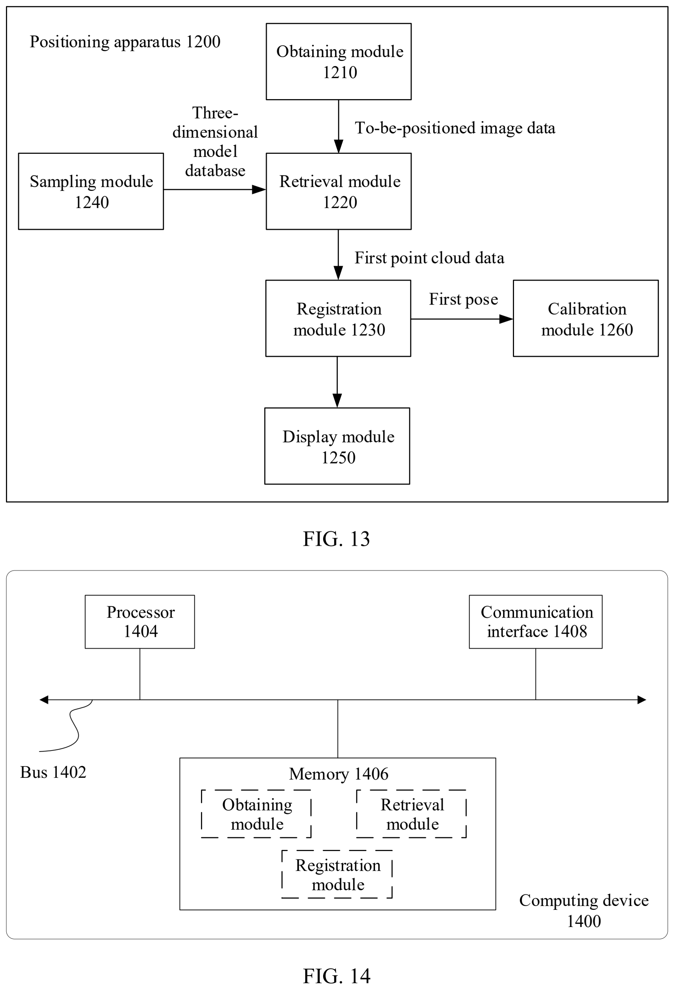

To further implement functions in the method embodiments shown in FIG. 1 to FIG. 10, this application further provides a positioning apparatus. FIG. 13 is a diagram 2 of a structure of a cloud technology-based positioning apparatus according to this application. The positioning apparatus 1200 further includes a sampling module 1240, a display module 1250, and a calibration module 1260.

The sampling module 1240 is configured to receive a sampling density parameter; divide, based on the sampling density parameter, the sampling region of the three-dimensional model for the site to which the to-be-positioned image data belongs into a plurality of sampling sub-regions; and separately perform point cloud data sampling on the plurality of sampling sub-regions, to obtain the three-dimensional model database.

The display module 1250 is configured to comparatively display rendered image data of the three-dimensional model at the first pose and the to-be-positioned image data when receiving a comparison display instruction triggered by the user; or separately display rendered image data of the three-dimensional model at the first pose or the to-be-positioned image data when receiving a separate display instruction triggered by the user.

The calibration module 1260 is configured to extract a first multi-level feature of the to-be-positioned image data and a second multi-level feature of a planar image corresponding to the first point cloud data; and calibrate the first pose based on the first multi-level feature and the second multi-level feature to obtain a second pose. The multi-level feature indicates a feature combination obtained by undergoing feature extraction networks with different quantities of layers. The three-dimensional model database further includes image data corresponding to the point cloud data, and the image data indicates a planar image in the sampling region of the three-dimensional model for the site to which the to-be-positioned image data belongs.

In a possible example, the obtaining module 1210, the retrieval module 1220, the registration module 1230, the sampling module 1240, the display module 1250, and the calibration module 1260 may all be implemented by using software, or may be implemented by using hardware.

For example, the following uses the obtaining module 1210 as an example to describe an implementation of the obtaining module 1210. Similarly, for implementations of the retrieval module 1220, the registration module 1230, the sampling module 1240, the display module 1250, and the calibration module 1260, refer to the implementation of the obtaining module 1210.

The module is used as an example of a software functional unit, and the obtaining module 1210 may include code run on a computing instance. The computing instance may be a physical host (computing device), or the like.

For example, there may be one or more computing instances. For example, the obtaining module 1210 may include code run on a plurality of hosts. It should be noted that the plurality of hosts configured to run the code may be distributed in a same region (region), or may be distributed in different regions.

For example, the plurality of hosts configured to run the code may be distributed in a same availability zone (availability zone, AZ), or may be distributed in different AZs. Each AZ includes one data center or a plurality of data centers with similar geographical locations. One region may usually include a plurality of AZs.

Similarly, the plurality of hosts configured to run the code may be distributed in a same virtual private cloud (virtual private cloud, VPC), or may be distributed in a plurality of VPCs. One VPC is usually disposed in one region. For cross-region communication between two VPCs in a same region and between VPCs in different regions, a communication gateway needs to be disposed in each VPC, and interconnection between the VPCs is implemented through the communication gateway.

The module is used as an example of a hardware functional unit, and the obtaining module 1210 may include at least one computing device, for example, a server. Alternatively, the obtaining module 1210 may be a device implemented by using an application-specific integrated circuit (application-specific integrated circuit, ASIC), a programmable logic device (programmable logic device, PLD), or the like. The PLD may be implemented by using a complex programmable logic device (complex programmable logic device, CPLD), a field programmable gate array (field-programmable gate array, FPGA), a generic array logic (generic array logic, GAL), or any combination thereof.

A plurality of computing devices included in the obtaining module 1210 may be distributed in a same region, or may be distributed in different regions. The plurality of computing devices included in the obtaining module 1210 may be distributed in a same AZ, or may be distributed in different AZs. Similarly, the plurality of computing devices included in the obtaining module 1210 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the obtaining module 1210 may be configured to perform any step in the positioning method, the retrieval module 1220 may be configured to perform any step in the positioning method, the registration module 1230 may be configured to perform any step in the positioning method, steps implemented by the obtaining module 1210, the retrieval module 1220, and the registration module 1230 may be specified as required, and the obtaining module 1210, the retrieval module 1220, and the registration module 1230 respectively implement different steps in the positioning method to implement all functions of the cloud technology-based positioning apparatus.

It should be noted that the computing device 310 in the foregoing embodiment may correspond to the positioning apparatus 1200, and may correspond to corresponding body corresponding to the methods in FIG. 4 to FIG. 10 in embodiments of this application, and operations and/or functions of the modules in the positioning apparatus 1200 are respectively used to implement corresponding procedures of the methods in the corresponding embodiments in FIG. 4 to FIG. 10. For brevity, details are not described herein again.

In addition, the positioning apparatus 1200 shown in FIG. 12 or FIG. 13 may alternatively be implemented by using a communication device. The communication device herein may be the computing device 310 in the foregoing embodiments. Alternatively, when the communication device is a chip or a chip system used in the computing device 310, the positioning apparatus 1200 may alternatively be implemented by using the chip or the chip system.

An embodiment of this application further provides a chip system. The chip system includes a control circuit and an interface circuit. The interface circuit is configured to obtain to-be-positioned image data. The control circuit is configured to implement functions of the computing device 310 in the foregoing methods based on the to-be-positioned image data.

In a possible design, the chip system further includes a memory, configured to store program instructions and/or data. The chip system may include a chip, or may include a chip and another discrete component.

This application further provides a computing device. FIG. 14 is a diagram of a structure of a computing device according to this application. The computing device 1400 includes a bus 1402, a processor 1404, a memory 1406, and a communication interface 1408. The processor 1404, the memory 1406, and the communication interface 1408 communicate with each other through the bus 1402. The computing device 1400 may be a server or a terminal device. It should be noted that a quantity of processors and a quantity of memories in the computing device 1400 are not limited in this application.

The bus 1402 may be, but is not limited to, a PCIe bus, a universal serial bus (universal serial bus, USB), an inter-integrated circuit (inter-integrated circuit, I2C) bus, an EISA bus, a UB, a CXL, a CCIX, or the like. The bus 1402 may be classified into an address bus, a data bus, a control bus, and the like. For ease of representation, only one line is for representing the bus in FIG. 14, but this does not mean that there is only one bus or only one type of bus. The bus 1402 may include a path for transmitting information between components (for example, the memory 1406, the processor 1404, and the communication interface 1408) of the computing device 1400.

The processor 1404 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1406 may include a volatile memory (volatile memory), for example, a random access memory (random access memory, RAM). Alternatively, the memory 1406 may include a non-volatile memory (non-volatile memory), for example, a read-only memory (read-only memory, ROM), a flash memory, a hard disk drive (hard disk drive, HDD), or a solid state drive (solid state drive, SSD).

The memory 1406 stores executable program code, and the processor 1404 executes the executable program code to separately implement functions of the obtaining module, the retrieval module, and the registration module, so as to implement the foregoing positioning methods. In other words, the memory 1406 stores instructions used to perform the positioning methods.

Alternatively, the memory 1406 stores executable code, and the processor 1404 executes the executable code to separately implement functions of the obtaining module, the retrieval module, and the registration module, so as to implement the positioning methods. In other words, the memory 1406 stores instructions used to perform the positioning methods.

The communication interface 1408 uses a transceiver module such as, but not limited to, a network interface card or a transceiver to implement communication between the computing device 1400 and another device or a communication network.

An embodiment of this application further provides a computing device cluster. The computing device cluster includes at least one computing device 1400. A memory 1406 in one or more computing devices 1400 in the computing device cluster may store same instructions used to perform the positioning methods.

The computing device 1400 may be a server, for example, a central server, an edge server, or a local server in a local data center. In some embodiments, the computing device 1400 may alternatively be a terminal device such as a desktop computer, a notebook computer, or a smartphone.

In some possible implementations, the one or more computing devices in the computing device cluster may be connected through a network. The network may be a wide area network, a local area network, or the like.

An embodiment of this application further provides a computer program product including instructions. The computer program product may be software or a program product that includes instructions and that can be executable on a computing device or be stored in any usable medium. When the computer program product runs on at least one computing device, the at least one computing device is enabled to perform the positioning methods.

An embodiment of this application further provides a computer-readable storage medium. The computer-readable storage medium may be any usable medium that can be accessed by a computing device, or a data storage device such as a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions, and the instructions instruct the computing device to perform the positioning methods.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or instructions are loaded and executed on a computer, all or some of the procedures or functions described in embodiments of this application are performed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD).

The foregoing descriptions are merely specific implementations of this application, but the protection scope of this application is not limited thereto. Various equivalent modifications or replacements readily figured out by a person skilled in the art within the technical scope disclosed in this application shall fall within the protection scope of this application. Therefore, the protection scope of this application shall be subject to the protection scope of the claims.

**Claims**

1. A cloud technology-based positioning method, wherein the method comprises:

    obtaining to-be-positioned image data, wherein the to-be-positioned image data comprises an image or a video;
    retrieving the to-be-positioned image data from a three-dimensional model database, to obtain first point cloud data having a matched similarity to the to-be-positioned image data, wherein the three-dimensional model database comprises a plurality of pieces of point cloud data obtained by sampling a three-dimensional model for a site to which the to-be-positioned image data belongs, and the point cloud data indicates a point having location information in a sampling region of the three-dimensional model; and
    performing registration on the to-be-positioned image data based on a point having location information in the first point cloud data, to obtain a first pose corresponding to the to-be-positioned image data.

2. The method according to claim 1, wherein the method further comprises:

    receiving a sampling density parameter;
    dividing, based on the sampling density parameter, the sampling region of the three-dimensional model for the site to which the to-be-positioned image data belongs into a plurality of sampling sub-regions; and
    separately performing point cloud data sampling on the plurality of sampling sub-regions, to obtain the three-dimensional model database.

3. The method according to claim 1 or 2, wherein the performing registration on the to-be-positioned image data based on the point having the location information in the first point cloud data, to obtain the first pose corresponding to the to-be-positioned image data comprises:

    generating a processing interface corresponding to the first point cloud data;
    receiving a trigger operation of a user on the processing interface;
    in response to the trigger operation, determining to-be-registered point cloud data selected by the user from the first point cloud data; and
    performing registration on the to-be-positioned image data based on a point having location information in the to-be-registered point cloud data, to obtain the first pose corresponding to the to-be-positioned image data.

4. The method according to claim 3, wherein the processing interface comprises a distribution heat map of the first point cloud data, and the distribution heat map of the first point cloud data indicates a density of points that have location information in the first point cloud data and that are in the three-dimensional model for the site to which the to-be-positioned image data belongs.

5. The method according to any one of claims 1 to 4, wherein the method further comprises:

    comparatively displaying rendered image data of the three-dimensional model at the first pose and the to-be-positioned image data when receiving a comparison display instruction triggered by the user; or
    separately displaying rendered image data of the three-dimensional model at the first pose or the to-be-positioned image data when receiving a separate display instruction triggered by the user.

6. The method according to any one of claims 1 to 5, wherein the three-dimensional model database further comprises image data corresponding to the point cloud data, the image data indicates a planar image in the sampling region of the three-dimensional model for the site to which the to-be-positioned image data belongs, and after the performing registration on the to-be-positioned image data based on the point having the location information in the first point cloud data, to obtain the first pose corresponding to the to-be-positioned image data, the method further comprises:

> extracting a first multi-level feature of the to-be-positioned image data and a second multi-level feature of a planar image corresponding to the first point cloud data, wherein the multi-level feature indicates a feature combination obtained by undergoing feature extraction networks with different quantities of layers; and
> calibrating the first pose based on the first multi-level feature and the second multi-level feature to obtain a second pose.

7. The method according to any one of claims 1 to 6, wherein the three-dimensional model database further comprises semantic data corresponding to the point cloud data, the semantic data indicates semantic information in the sampling region of the three-dimensional model for the site to which the to-be-positioned image data belongs, and the retrieving the to-be-positioned image data from the three-dimensional model database, to obtain the first point cloud data having the matched similarity to the to-be-positioned image data comprises:

> determining semantic information of the to-be-positioned image data, and retrieving the semantic information of the to-be-positioned image data from the three-dimensional model database, to obtain first semantic data having a matched similarity to the semantic information of the to-be-positioned image data; and
> determining, based on a correspondence between point cloud data and semantic data, the first point cloud data corresponding to the first semantic data.

8. The method according to any one of claims 1 to 6, wherein the retrieving the to-be-positioned image data from the three-dimensional model database, to obtain the first point cloud data having the matched similarity to the to-be-positioned image data comprises:
determining point cloud information of the to-be-positioned image data, and retrieving the point cloud information of the to-be-positioned image data from the three-dimensional model database, to obtain the first point cloud data having a matched similarity to the point cloud information of the to-be-positioned image data.

9. A cloud technology-based positioning apparatus, wherein the apparatus comprises:

> an obtaining module, configured to obtain to-be-positioned image data, wherein the to-be-positioned image data comprises an image or a video;
> a retrieval module, configured to retrieve the to-be-positioned image data from a three-dimensional model database, to obtain first point cloud data having a matched similarity to the to-be-positioned image data, wherein the three-dimensional model database comprises a plurality of pieces of point cloud data obtained by sampling a three-dimensional model for a site to which the to-be-positioned image data belongs, and the point cloud data indicates a point having location information in a sampling region of the three-dimensional model; and
> a registration module, configured to perform registration on the to-be-positioned image data based on a point having location information in the first point cloud data, to obtain a first pose corresponding to the to-be-positioned image data.

10. The apparatus according to claim 9, wherein the apparatus further comprises:
a sampling module, configured to receive a sampling density parameter; divide, based on the sampling density parameter, the sampling region of the three-dimensional model for the site to which the to-be-positioned image data belongs into a plurality of sampling sub-regions; and separately perform point cloud data sampling on the plurality of sampling sub-regions, to obtain the three-dimensional model database.

11. The apparatus according to claim 9 or 10, wherein the registration module is specifically configured to generate a processing interface corresponding to the first point cloud data; receive a trigger operation of a user on the processing interface; in response to the trigger operation, determine to-be-registered point cloud data selected by the user from the first point cloud data; and perform registration on the to-be-positioned image data based on a point having location information in the to-be-registered point cloud data, to obtain the first pose corresponding to the to-be-positioned image data.

12. The apparatus according to claim 11, wherein the processing interface comprises a distribution heat map of the first point cloud data, and the distribution heat map of the first point cloud data indicates a density of points that have location information in the first point cloud data and that are in the three-dimensional model for the site to which the to-be-positioned image data belongs.

13. The apparatus according to any one of claims 9 to 12, wherein the apparatus further comprises:
a display module, configured to comparatively display rendered image data of the three-dimensional model at the first pose and the to-be-positioned image data when receiving a comparison display instruction triggered by the user; or separately display rendered image data of the three-dimensional model at the first pose or the to-be-positioned image data when receiving a separate display instruction triggered by the user.

14. The apparatus according to any one of claims 9 to 13, wherein the three-dimensional model database further comprises image data corresponding to the point cloud data, the image data indicates a planar image in the sampling region of the three-dimensional model for the site to which the to-be-positioned image data belongs, and the apparatus further comprises:
a calibration module, configured to extract a first multi-level feature of the to-be-positioned image data and a second multi-level feature of a planar image corresponding to the first point cloud data; and calibrate the first pose based on the first multi-level feature and the second multi-level feature to obtain a second pose, wherein the multi-level feature indicates a feature combination obtained by undergoing feature extraction networks with different quantities of layers.

15. The apparatus according to any one of claims 9 to 14, wherein the three-dimensional model database further comprises semantic data corresponding to the point cloud data, the semantic data indicates semantic information in the sampling region of the three-dimensional model for the site to which the to-be-positioned image data belongs, and the retrieval module is specifically configured to determine semantic information of the to-be-positioned image data, and retrieve the semantic information of the to-be-positioned image data from the three-dimensional model database, to obtain first semantic data having a matched similarity to the semantic information of the to-be-positioned image data; and determine, based on a correspondence between point cloud data and semantic data, the first point cloud data corresponding to the first semantic data.

16. The apparatus according to any one of claims 9 to 14, wherein the retrieval module is specifically configured to determine point cloud information of the to-be-positioned image data, and retrieve the point cloud information of the to-be-positioned image data from the three-dimensional model database, to obtain the first point cloud data having a matched similarity to the point cloud information of the to-be-positioned image data.

17. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 8.

18. A computer program product comprising instructions, wherein when the instructions are run by a computer device cluster, the computer device cluster is enabled to perform the method according to any one of claims 1 to 8.

19. A computer-readable storage medium, comprising computer program instructions, wherein when the computer program instructions are executed by a computing device cluster, the computing device cluster performs the method according to any one of claims 1 to 8.

EP 4 693 183 A1

FIG. 1

Convolutional neural network 200

Multi-layer perceptron 230

Output layer 240

Hidden layer n (layer 23n)

Hidden layer 2 (layer 232)

Hidden layer 1 (layer 231)

Convolutional layer/Pooling layer 220

Layer 226

Layer 225

Layer 224

Layer 223

Layer 222

Layer 221

Input layer 210

FIG. 2

Computing device 310

Terminal 320

Terminal 330

Terminal 340

FIG. 3

S410: Obtain

To-be-positioned image data

S420: Retrieve

First point cloud data

S430: Register

Location $(x_1, y_1, z_1)$

Angle $(a_1, b_1, c_1)$

First pose

...

Three-dimensional model database

FIG. 4

To-be-positioned
image data

Planar image

Location $(x_1, y_1, z_1)$

Angle $(a_1, b_1, c_1)$

First pose

| Convolutional layer 501 |
| Activation layer 502 |
| Pooling layer 503 |

First-level feature

First multi-level feature

| Convolutional layer 504 |
| Activation layer 505 |
| Pooling layer 506 |

Second-level feature

S510:
Determine

Location $(x_2, y_2, z_2)$

S520:
Calibrate

Angle $(a_2, b_2, c_2)$

Second pose

| Convolutional layer 507 |
| Activation layer 508 |
| Pooling layer 509 |

Third-level feature

Second multi-level feature

FIG. 5

To-be-positioned image data          Rendered image

a

b

FIG. 6

To-be-positioned image data

Rendered image

a

b

- - - - - ⌐ Pipeline network

**FIG. 7**

FIG. 8

EP 4 693 183 A1

Location $(x_1, y_1, z_1)$

Angle $(a_1, b_1, c_1)$

First pose

S930: Point cloud registration

Point cloud data b

Three-dimensional model database

S920: Retrieve

Image point cloud data a

S910: Construct

Video data

FIG. 9

S1010: Obtain

Image b

S1020: Construct

Image point cloud data b

S1030: Retrieve

Point cloud data d

S1040: Point cloud registration

Location $(x_1, y_1, z_1)$

Angle $(a_1, b_1, c_1)$

First pose

Three-dimensional model database

FIG. 10

Panoramic camera

RGBD camera

FIG. 11

Positioning apparatus 1200

Obtaining module 1210

To-be-positioned image data

Retrieval module 1220

First point cloud data

Registration module 230

FIG. 12

Positioning apparatus 1200

Obtaining module 1210

Sampling module 1240

Three-dimensional model database

To-be-positioned image data

Retrieval module 1220

First point cloud data

Registration module 1230

First pose

Calibration module 1260

Display module 1250

**FIG. 13**

Processor 1404

Communication interface 1408

Bus 1402

Memory 1406

Obtaining module

Retrieval module

Registration module

Computing device 1400

**FIG. 14**

## INTERNATIONAL SEARCH REPORT

| International application No. |
|---|
| **PCT/CN2023/136261** |

| A. | CLASSIFICATION OF SUBJECT MATTER |
|---|---|

G06T7/33(2017.01)i; G06T7/73(2017.01)i

According to International Patent Classification (IPC) or to both national classification and IPC

| B. | FIELDS SEARCHED |
|---|---|

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT, DWPI, ENTXTC, WPABS: 定位, 图片, 图像, 视觉, 点云, 检索, 搜索, 匹配, 配准, 位姿, 语义, position+, image, visual, point, cloud, pose?, search, match+, semantic

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112598736 A (CHANGSHA XINGSHEN INTELLIGENT TECHNOLOGY CO., LTD.) 02 April 2021 (2021-04-02) description, paragraphs [0035]-[0088], and figures 1-9 | 1-4, 7-12, 15-19 |
| A | CN 111862205 A (BEIJING DIDI INFINITY TECHNOLOGY AND DEVELOPMENT CO., LTD.) 30 October 2020 (2020-10-30) entire document | 1-19 |
| A | CN 115170652 A (ALIBABA SINGAPORE HOLDINGS LIMITED) 11 October 2022 (2022-10-11) entire document | 1-19 |
| A | CN 115578539 A (SHENZHEN UNIVERSITY) 06 January 2023 (2023-01-06) entire document | 1-19 |
| A | US 2022108528 A1 (ZHEJIANG SENSETIME TECHNOLOGY DEVELOPMENT CO., LTD.) 07 April 2022 (2022-04-07) entire document | 1-19 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **26 January 2024** | **07 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/136261**

| Patent document cited in search report | | | Publication date (day/month/year) | Patent family member(s) | | | Publication date (day/month/year) |
|---|---|---|---|---|---|---|---|
| CN | 112598736 | A | 02 April 2021 | None | | | |
| CN | 111862205 | A | 30 October 2020 | US | 2022319046 | A1 | 06 October 2022 |
| CN | 115170652 | A | 11 October 2022 | None | | | |
| CN | 115578539 | A | 06 January 2023 | None | | | |
| US | 2022108528 | A1 | 07 April 2022 | JP | 2022537984 | A | 31 August 2022 |
| | | | | WO | 2021017314 | A1 | 04 February 2021 |
| | | | | TW | 202105328 | A | 01 February 2021 |
| | | | | CN | 112381919 | A | 19 February 2021 |
| | | | | HK | 40039090 | A0 | 09 July 2021 |
| | | | | SG | 11202113981 | A | 28 January 2022 |

Form PCT/ISA/210 (patent family annex) (July 2022)